(19) **Europäisches Patentamt / European Patent Office / Office européen des brevets**

(11) **EP 4 560 947 A1**

(12) **EUROPEAN PATENT APPLICATION**
published in accordance with Art. 153(4) EPC

(43) Date of publication:
**28.05.2025   Bulletin 2025/22**

(21) Application number: **23841964.2**

(22) Date of filing: **13.06.2023**

(51) International Patent Classification (IPC):
**H04L 1/00** (2006.01)

(52) Cooperative Patent Classification (CPC):
**H04L 1/00; H04W 92/10**

(86) International application number:
**PCT/CN2023/099900**

(87) International publication number:
**WO 2024/016898 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **20.07.2022   CN 202210864235**

(71) Applicant: **Datang Mobile Communications Equipment Co., Ltd.**
**Beijing 100085 (CN)**

(72) Inventor: **WANG, Junwei**
**Beijing 100085 (CN)**

(74) Representative: **Studio Torta S.p.A.**
**Via Viotti, 9**
**10121 Torino (IT)**

(54) **INFORMATION TRANSMISSION METHOD, APPARATUS, NETWORK DEVICE, AND TERMINAL**

(57)   The present disclosure provides an information transmission method and device, a network device and UE. The method is applied to a network device and includes: determining a target encoding length according to a parameter length W and a number M of transmission information; wherein a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers; encoding the M pieces of transmission information to obtain indication information, where a length of the indication information is the target encoding length; sending the indication information to a user equipment (UE).

determining a target encoding length according to a parameter length W and a number M of transmission information; where a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers — 101

encoding the M pieces of transmission information to obtain indication information, where a length of the indication information is the target encoding length — 102

sending the indication information to a user equipment — 103

FIG. 4

**Description**

**CROSS-REFERENCE TO RELATED APPLICATION**

The present disclosure claims the priority of Chinese Application No. 202210864235.X, filed on July 20, 2022, the disclosure of which is incorporated in its entirety by reference herein.

**TECHNICAL FIELD**

The present disclosure relates to the field of communication technologies, and in particular to an information transmission method and apparatus, network device and user equipment.

**BACKGROUND**

In the related technical solution, each piece of information that needs to be indicated is individually coded. It is assumed that an encoding length of each information is a, then for M pieces of information, a×M bits need to be transmitted. In this way, a large overhead is required, resulting in a waste of air interface resources.

Considering scarcity of air interface resources, how to save air interface resources when transmitting multiple pieces of information is an urgent technical issue that needs to be solved.

**SUMMARY**

An object of the present disclosure is to provide an information transmission method and apparatus, network device and user equipment, which can solve the problem of how to save air interface resources when performing multiple information transmission in the related art.

In a first aspect, in order to solve the above technical problem, one embodiment of the present disclosure provides an information transmission method, applied to a network device, including:

determining a target encoding length according to a parameter length W and a number M of transmission information; wherein a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers;

encoding the M pieces of transmission information to obtain indication information, where a length of the indication information is the target encoding length;

sending the indication information to a user equipment (UE).

Optionally, the M pieces of transmission information are used to indicate dividing points of M+1 segments of the parameter length W; or,

the M pieces of transmission information are used to indicate M pieces of modulation code scheme (MCS) index information.

Optionally, the determining a target encoding length according to a parameter length W and a number M of transmission information, includes:

determining a first parameter; wherein the first parameter is used to represent the number of combinations of values of the M pieces of transmission information in a range of 0 to W-1;

determining the target encoding length according to the first parameter.

Optionally, the determining the first parameter, includes:

determining the first parameter according to the parameter length W, the number M of transmission information, and a first algorithm.

Optionally, the first algorithm includes:

when M=3, $\text{the first parameter} = \frac{W*(W+1)*(2W+1)}{12} + \frac{W*(W+1)}{4}$ ; or,

when M=4, $\text{the first parameter} = \frac{W*(W+1)^2*(2W+1)}{12} - \frac{(W*(W+1))^2}{8} +$

$$\frac{W*(W+1)*(2W+1)}{24} + \frac{W*(W+1)}{8} \ .$$

Optionally, the determining the target encoding length according to the first parameter, includes: determining the target encoding length according to the first parameter and a second algorithm.

Optionally, the second algorithm includes:

$$\text{the target encoding length} = \lceil \log_2(\text{first parameter}) \rceil.$$

Optionally, in a case where M=3, the M pieces of transmission information include: first information, second information and third information, and a value of the first information is less than or equal to a value of the second information, and the value of the second information is less than or equal to a value of the third information;

the encoding the M pieces of transmission information to obtain indication information, includes:

> determining a first encoding value according to the first information and the parameter length W;
> determining a second encoding value according to the parameter length W, the first information, the second information and the third information;
> obtaining the indication information according to the first encoding value and the second encoding value.

Optionally, the determining a first encoding value according to the first information and the parameter length W, includes:

> when start_1=0, SIV1=0; or,
>
> when start_1≥1, $\quad \text{SIV1} = \sum_{i=0}^{\text{start\_1}-1} \left( \frac{(W+1-i)*(W-i)}{2} \right)$ ;
>
> wherein start_1 is the first information; i=0, ..., start_1-1; and i is an integer; W is the parameter length; SIV1 is the first encoding value.

Optionally, the determining a second encoding value according to the parameter length W, the first information, the second information, and the third information includes:

determining the second encoding value according to the parameter length W, a difference between the second information and the first information, and a distance from the second information to the third information.

Optionally, the determining the second encoding value according to a difference between the second information and the first information and a distance from the second information to the third information, includes:

> determining the second encoding value according to the formula:

$$\text{SIV2} = \text{start} + \sum_{i=1}^{L-1}(N + 1 - i);$$

> wherein start is the difference between the second information and the first information; SIV2 is the second encoding value; N is the difference between W and the first information; L is the distance from the second information to the third information; i=1, ..., L-1; and i is an integer; W is the parameter length.

Optionally, the determining the second encoding value according to a difference between the second information and the first information and a distance from the second information to the third information, includes:

> when Start=0, the second encoding value is L;
>
> when start≥1, determining the second encoding value according to the formula: $\quad L + \sum_{i=1}^{\text{start}}(N + 1 - \text{start})$ ;
>
> wherein start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

Optionally, the determining the second encoding value according to the parameter length W, the first information, the second information, and the third information, includes:

in a case where start_3 - start_2 ≤ |(*W* - *start*_1)/2|, determining the second encoding value according to the formula: SIV2 = (*W* - *start*_1) (start_3 - start_2) + start_2 - start_1;

in a case where start_3 - start_2 > |(*W* - *start*_1)/2|, determining the second encoding value according to the formula: SIV2 = (*W* - *start*_1) (W + start_2 - start_1 - start_3) + (*W* - 1 - *start*_2);

wherein 0 < start_3 - start_2 + 1 ≤ *W* - *start*_2; SIV2 is the second encoding value; start_1 is the first information; start_2 is the second information; start_3 is the third information; W is the parameter length.

Optionally, the determining the second encoding value according to the parameter length W, the first information, the second information, and the third information, includes:

determining the second encoding value according to the formula:

$$SIV2 = start\_3 - start\_2 + \sum_{i=1}^{start\_2 - start\_1}(W + 1 - start\_2);$$

wherein start_1 is the first information; start_2 is the second information; start_3 is the third information; W is the parameter length.

Optionally, in a case where M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information;

the encoding the M pieces of transmission information to obtain indication information, includes:

determining a third encoding value according to the fourth information and the parameter length W;
determining a fourth encoding value according to the fifth information and the parameter length W;
determining a fifth encoding value according to the fourth information, the fifth information and the sixth information;
obtaining the indication information according to the third encoding value, the fourth encoding value and the fifth encoding value.

Optionally, the determining the third encoding value according to the fourth information and the parameter length W, includes:

when start_0=0, SIV0=0;

$$SIV0 = \sum_{i=0}^{start\_0-1}(\frac{(W-i)\times(W+1-i)*(2\ (W-i)+1)}{12} + \frac{(W-i)*(W+1-i)}{4});$$

when start_0 ≥ 1,

wherein start_0 is the fourth information; i=0, ..., start_0-1; and i is an integer; W is the parameter length; SIV0 is the third encoding value.

Optionally, the determining the fourth encoding value according to the fifth information and the parameter length W, includes:

when start_1=0, SIV1=0;

$$SIV1 = \sum_{i=0}^{start\_1-1}(\frac{(W-start\_0+1-i)*(W-start\_0-i)}{2});$$

when start_1≥1,

wherein start_1 is the fifth information; i=0, ..., start_1-1; and i is an integer; W is the parameter length; SIV1 is the fourth encoding value.

Optionally, the determining the fifth encoding value according to the fourth information, the fifth information and the sixth information, includes:
determining the fifth encoding value according to a difference between the fifth information and the fourth information, and a distance from the sixth information to the seventh information.

Optionally, the determining the fifth encoding value according to a difference between the fifth information and the fourth information, and a distance from the sixth information to the seventh information, includes:

determining the fifth encoding value according to the formula: SIV2 = $start + \sum_{i=1}^{L-1}(N + 1 - i)$;
wherein start is the difference between the fifth information and the fourth information; SIV2 is the fifth encoding value; N is the difference between W and the fourth information; L is the distance from the sixth information and to the seventh information, L$\geq$ 1, and L is an integer; i=1, ..., L-1; and i is an integer.

In a second aspect, in order to solve the above technical problem, one embodiment of the present disclosure provides an information transmission method, applied to a user equipment (UE), including:

receiving indication information sent by a network device;
determining a target encoding length according to a parameter length W and a number M of transmission information; wherein an encoding length of the indication information is the target encoding length; a value or a value range of a corresponding index value s, of each transmission information in the M transmission information is: 0$\leq$s$\leq$W-1; a value of an n-th transmission information is less than or equal to a value of (n+1)-th transmission information, 1$\leq$n$\leq$M, n, M and W are positive integers;
decoding the indication information according to the target encoding length to obtain M pieces of transmission information.

Optionally, the M pieces of transmission information are used to indicate dividing points of M+1 segments of the parameter length W; or,
the M pieces of transmission information are used to indicate M pieces of modulation code scheme (MCS) index information.

Optionally, the determining a target encoding length according to a parameter length W and a number M of transmission information, includes:

determining a first parameter; where the first parameter is used to represent the number of combinations of values of the M pieces of transmission information in a range of 0 to W-1;
determining the target encoding length according to the first parameter.

Optionally, the determining the first parameter, includes:
determining the first parameter according to the parameter length W, the number M of transmission information, and a first algorithm.

Optionally, the first algorithm includes:

when M=3, $\text{the first parameter} = \frac{W*(W+1)*(2W+1)}{12} + \frac{W*(W+1)}{4}$ ; or,

when M=4, $\text{the first parameter} = \frac{W*(W+1)^2*(2W+1)}{12} - \frac{(W*(W+1))^2}{8} + \frac{W*(W+1)*(2W+1)}{24} + \frac{W*(W+1)}{8}$ .

Optionally, the determining the target encoding length according to the first parameter, includes:
determining the target encoding length according to the first parameter and a second algorithm.

Optionally, the second algorithm includes:

the target encoding $\text{the target encoding length} = \lceil \log_2(\text{first parameter}) \rceil$ .

Optionally, in a case where M=3, the M pieces of transmission information include: first information, second information and third information, and a value of the first information is less than or equal to a value of the second information, and the value of the second information is less than or equal to a value of the third information;

the decoding the indication information according to the target encoding length to obtain M pieces of transmission information, includes:
decoding to obtain the first information and a first encoding value corresponding to the first information according to the parameter length W and the target encoding length;
according to the first encoding value and the target encoding length, obtaining a second encoding value;
determining the second information and the third information according to the parameter length W, the first information and the second encoding value.

Optionally, the decoding to obtain the first information and a first code value corresponding to the first information according to the parameter length W and the target encoding length includes:

within the value range, traversing possible values of the first information, and determining a value that meets a first condition as the first information; the first condition is: $\max\ \left( \sum_{i=0}^{\text{start\_1}-1} \left( \frac{(W+1-i)*(W-i)}{2} \right) \le SIV \right)$ ; and, determining the first encoding value according to the formula:

$$SIV1 = \sum_{i=0}^{\text{start\_1}-1} \left( \frac{(W+1-i)*(W-i)}{2} \right);$$

wherein start_1 is the first information; i=0, ..., start_1-1; and i is an integer; W is the parameter length; SIV1 is the first encoding value; when start_1=0, $\sum_{i=0}^{\text{start\_1}-1} \left( \frac{(W+1-i)*(W-i)}{2} \right) = 0$ .

Optionally, the determining the second information and the third information according to the parameter length W, the first information and the second encoding value, includes:
obtaining a difference between the second information and the first information and a distance from the second information to the third information according to the parameter length W, the first information and the second encoding value.

Optionally, the obtaining a difference between the second information and the first information and a distance from the second information to the third information according to the parameter length W, the first information and the second encoding value, includes:

according to the formula: $SIV2 = \text{start} + \sum_{i=1}^{L-1}(N+1-i)$ , determining the difference between the second information and the first information and the distance from the second information to the third information; wherein start is the difference between the second information and the first information; SIV2 is the second encoding value; N is the difference between W and the first information; L is the distance from the second information to the third information; i=1, ..., L-1; and i is an integer; W is the parameter length.

Optionally, the obtaining a difference between the second information and the first information and a distance from the second information to the third information according to the parameter length W, the first information and the second encoding value, includes:

according to the formula: $SIV2 = L + \sum_{i=1}^{\text{start}}(N+1-\text{start}\ )$ , determining the difference between the second information and the first information, and the distance from the second information to the third information; wherein when Start=0, the second encoding value is L; start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

In a third aspect, in order to solve the above technical problem, one embodiment of the present disclosure provide a network device, including: a transceiver, a memory, a processor, and a computer program stored on the memory and executable on the processor; wherein the processor is used to read the program in the memory and perform the following process:

determining a target encoding length according to a parameter length W and a number M of transmission information; wherein a value or a value range of a corresponding index value s, of each transmission information in the M transmission information is: 0≤s≤W-1; a value of an n-th transmission information is less than or equal to a value of (n+1)-th transmission information, 1≤n≤M, n, M and W are positive integers; encoding the M pieces of transmission information to obtain indication information, where a length of the indication information is the target encoding length; sending the indication information to a user equipment (UE).

Optionally, the M pieces of transmission information are used to indicate dividing points of M+1 segments of the parameter length W; or,

the M pieces of transmission information are used to indicate M pieces of modulation code scheme (MCS) index information.

Optionally, the processor is further used to read the program in the memory and perform the following process:

determining a first parameter; wherein the first parameter is used to represent the number of combinations of values of the M pieces of transmission information in a range of 0 to W-1;

determining the target encoding length according to the first parameter.

Optionally, the processor is further used to read the program in the memory and perform the following process: determining the first parameter according to the parameter length W, the number M of transmission information, and a first algorithm.

Optionally, the first algorithm includes:

when M=3, $\text{the first parameter} = \frac{W*(W+1)*(2W+1)}{12} + \frac{W*(W+1)}{4}$ ; or,

when M=4, $\text{the first parameter} = \frac{W*(W+1)^2*(2W+1)}{12} - \frac{(W*(W+1))^{\tilde{}}}{8} + \frac{W*(W+1)*(2W+1)}{24} + \frac{W*(W+1)}{8}$ .

Optionally, the processor is used to read the program in the memory and perform the following process: determining the target encoding length according to the first parameter and a second algorithm.

Optionally, the second algorithm includes:

the target encoding $\text{length} = \lceil \log_2 (\text{first parameter}) \rceil$ .

Optionally, in a case where M=3, the M pieces of transmission information include: first information, second information and third information, and a value of the first information is less than or equal to a value of the second information, and the value of the second information is less than or equal to a value of the third information;

the processor is used to read the program in the memory and perform the following process:

determining a first encoding value according to the first information and the parameter length W;

determining a second encoding value according to the parameter length W, the first information, the second information and the third information;

obtaining the indication information according to the first encoding value and the second encoding value.

Optionally, the processor is used to read the program in the memory and perform the following process:

when start_1=0, SIV1=0; or,

when start_1≥1, $\text{SIV1} = \sum_{i=0}^{\text{start\_1}-1} \left( \frac{(W+1-i)*(W-i)}{2} \right)$ ;

wherein start_1 is the first information; i=0, ..., start_1-1; and i is an integer; W is the parameter length; SIV1 is the first encoding value.

Optionally, the processor is used to read the program in the memory and perform the following process: determining the second encoding value according to the parameter length W, a difference between the second information and the first information, and a distance from the second information to the third information.

Optionally, the processor is used to read the program in the memory and perform the following process:

determining the second encoding value according to the formula:

$$\text{SIV2} = \text{start} + \sum_{i=1}^{L-1} (N + 1 - i);$$

wherein start is the difference between the second information and the first information; SIV2 is the second encoding value; N is the difference between W and the first information; L is the distance from the second information to the third information; i=1, ..., L-1; and i is an integer; W is the parameter length.

Optionally, the processor is used to read the program in the memory and perform the following process:

when Start=0, the second encoding value is L;

when start≥1, determining the second encoding value according to the formula: $L + \sum_{i=1}^{\text{start}}(N + 1 - \text{start})$;

wherein start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

Optionally, the processor is used to read the program in the memory and perform the following process:

in a case where start_3 - start_2 ≤ |(W - *start_*1)/2|, determining the second encoding value according to the formula:
SIV2 = *(W - start_1)* (start_3 - start_2) + start_2 - start_1;
in a case where start_3 - start_2 > |(W - *start_*1)/2|, determining the second encoding value according to the formula:
SIV2 = *(W - start_*1) (W + start_2 - start_1 - start_3) + (*W* - 1 - *start_*2);
wherein 0 < start_3 - start_2+1 ≤ *W - start_*2; SIV2 is the second encoding value; start_1 is the first information; start_2 is the second information; start_3 is the third information; W is the parameter length.

Optionally, the processor is used to read the program in the memory and perform the following process:

determining the second encoding value according to the formula:

$$\text{SIV2} = start\_3 - \text{start\_2} + \sum_{i=1}^{\text{start\_2 - start\_1}}(W + 1 - \text{start\_2});$$

wherein start_1 is the first information; start_2 is the second information; start_3 is the third information; W is the parameter length.

Optionally, in a case where M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information;
the processor is used to read the program in the memory and perform the following process:

determining a third encoding value according to the fourth information and the parameter length W;
determining a fourth encoding value according to the fifth information and the parameter length W;
determining a fifth encoding value according to the fourth information, the fifth information and the sixth information;
obtaining the indication information according to the third encoding value, the fourth encoding value and the fifth encoding value.

Optionally, the processor is used to read the program in the memory and perform the following process:

when start_0=0, SIV0=0;
when start_0 ≥ 1, $\text{SIV0} = \sum_{i=0}^{\text{start\_0}-1}(\frac{(W-i)\times(W+1-i)*(2\ (W-i)+1)}{12} + \frac{(W-i)*(W+1-i)}{4})$;
wherein start_0 is the fourth information; i=0, ..., start_0-1; and i is an integer; W is the parameter length; SIV0 is the third encoding value.

Optionally, the processor is used to read the program in the memory and perform the following process:

when start_1=0, SIV1=0;
when start_1≥1, $\text{SIV1}=\sum_{i=0}^{\text{start\_1}-1}(\frac{(W-start\_0+1-i)*(W-start\_0-i)}{2})$;
wherein start_1 is the fifth information; i=0, ..., start_1-1; and i is an integer; W is the parameter length; SIV1 is the fourth encoding value.

Optionally, the processor is used to read the program in the memory and perform the following process: determining the fifth encoding value according to a difference between the fifth information and the fourth information, and a distance from the sixth information to the seventh information.

Optionally, the processor is used to read the program in the memory and perform the following process:

determining the fifth encoding value according to the formula: $\text{SIV2} = \text{start} + \sum_{i=1}^{L-1}(N+1-i)$;

wherein start is the difference between the fifth information and the fourth information; SIV2 is the fifth encoding value; N is the difference between W and the fourth information; L is the distance from the sixth information and to the seventh information, $L \geq 1$, and L is an integer; i=1, ..., L-1; and i is an integer.

In a fourth aspect, in order to solve the above technical problem, one embodiment of the present disclosure provides a user equipment (UE), including: a transceiver, a memory, a processor, and a computer program stored on the memory and executable on the processor; wherein the processor is used to read the program in the memory and perform the following process:

receiving indication information sent by a network device;
determining a target encoding length according to a parameter length W and a number M of transmission information; wherein an encoding length of the indication information is the target encoding length; a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers;
decoding the indication information according to the target encoding length to obtain M pieces of transmission information.

Optionally, the M pieces of transmission information are used to indicate dividing points of M+1 segments of the parameter length W; or,
the M pieces of transmission information are used to indicate M pieces of modulation code scheme (MCS) index information.

Optionally, the processor is used to read the program in the memory and perform the following process:

determining a first parameter; where the first parameter is used to represent the number of combinations of values of the M pieces of transmission information in a range of 0 to W-1;
determining the target encoding length according to the first parameter.

Optionally, the processor is used to read the program in the memory and perform the following process: determining the first parameter according to the parameter length W, the number M of transmission information, and a first algorithm.

Optionally, the first algorithm includes:

when M=3, $\text{the first parameter} = \frac{W*(W+1)*(2W+1)}{12} + \frac{W*(W+1)}{4}$; or,

when M=4, $\text{the first parameter} = \frac{W*(W+1)^2*(2W+1)}{12} - \frac{(W*(W+1))^2}{8} + \frac{W*(W+1)*(2W+1)}{24} + \frac{W*(W+1)}{8}$.

Optionally, the processor is used to read the program in the memory and perform the following process: determining the target encoding length according to the first parameter and a second algorithm.

Optionally, the second algorithm includes:

the target encoding $\text{length} = \lceil \log_2(\text{first parameter}) \rceil$.

Optionally, in a case where M=3, the M pieces of transmission information include: first information, second information and third information, and a value of the first information is less than or equal to a value of the second information, and the value of the second information is less than or equal to a value of the third information;
the processor is used to read the program in the memory and perform the following process:

decoding to obtain the first information and a first encoding value corresponding to the first information according to the parameter length W and the target encoding length;

according to the first encoding value and the target encoding length, obtaining a second encoding value;

determining the second information and the third information according to the parameter length W, the first information and the second encoding value.

Optionally, the processor is used to read the program in the memory and perform the following process:

within the value range, traversing possible values of the first information, and determining a value that meets a first condition as the first information; the first condition is: $\max\ (\sum_{i=0}^{\text{start\_1}-1}\left(\frac{(W+1-i)*(W-i)}{2}\right) \le SIV)$; and, determining the first encoding value according to the formula:

$$SIV1 = \sum_{i=0}^{\text{start\_1}-1}\left(\frac{(W+1-i)*(W-i)}{2}\right);$$

wherein start_1 is the first information; i=0, ..., start_1-1; and i is an integer; W is the parameter length; SIV1 is the first encoding value; when start_1=0, $\sum_{i=0}^{\text{start\_1}-1}\left(\frac{(W+1-i)*(W-i)}{2}\right)=0$.

Optionally, the processor is used to read the program in the memory and perform the following process: obtaining a difference between the second information and the first information and a distance from the second information to the third information according to the parameter length W, the first information and the second encoding value.

Optionally, the processor is used to read the program in the memory and perform the following process:

according to the formula: $SIV2 = \text{start} + \sum_{i=1}^{L-1}(N+1-i)$, determining the difference between the second information and the first information and the distance from the second information to the third information;

wherein start is the difference between the second information and the first information; SIV2 is the second encoding value; N is the difference between W and the first information; L is the distance from the second information to the third information; i=1, ..., L-1; and i is an integer; W is the parameter length.

Optionally, the processor is used to read the program in the memory and perform the following process:

according to the formula: $SIV2 = L + \sum_{i=1}^{\text{start}}(N+1-\text{start}\ )$, determining the difference between the second information and the first information, and the distance from the second information to the third information; wherein when Start=0, the second encoding value is L; start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

In a fifth aspect, in order to solve the above technical problem, one embodiment of the present disclosure provides an information transmission device, including:

a first determination module used to determine a target encoding length according to a parameter length W and a number M of transmission information; where a value or a value range of a corresponding index value s, of each transmission information in the M transmission information is: 0≤s≤W-1; a value of an n-th transmission information is less than or equal to a value of (n+1)-th transmission information, 1≤n≤M, n, M and W are positive integers;
an encoding module used to encode the M pieces of transmission information to obtain indication information, where a length of the indication information is the target encoding length;
a transmission module used to send the indication information to a user equipment (UE).

Optionally, the M pieces of transmission information are used to indicate dividing points of M+1 segments of the parameter length W; or,
the M pieces of transmission information are used to indicate M pieces of modulation code scheme (MCS) index information.

Optionally, the first determination module includes:

a first determination sub-module used to determine a first parameter; wherein the first parameter is used to represent the number of combinations of values of the M pieces of transmission information in a range of 0 to W-1;
a second determination sub-module used to determine the target encoding length according to the first parameter.

Optionally, the first determination sub-module is specifically used to:
determine the first parameter according to the parameter length W, the number M of transmission information, and a first algorithm.

Optionally, the first algorithm includes:

when M=3, $\text{the first parameter} = \frac{W*(W+1)*(2W+1)}{12} + \frac{W*(W+1)}{4}$ ; or,

when M=4, $\text{the first parameter} = \frac{W*(W+1)^2*(2W+1)}{12} - \frac{(W*(W+1))^2}{8} + \frac{W*(W+1)*(2W+1)}{24} + \frac{W*(W+1)}{8}$ .

Optionally, the second determination sub-module is specifically used to:
determine the target encoding length according to the first parameter and a second algorithm.

Optionally, the second algorithm includes:

$\text{the target encoding length} = \lceil \log_2(\text{first parameter}) \rceil$ .

Optionally, in a case where M=3, the M pieces of transmission information include: first information, second information and third information, and a value of the first information is less than or equal to a value of the second information, and the value of the second information is less than or equal to a value of the third information;
the encoding module includes:

a first encoding submodule used to determine a first encoding value according to the first information and the parameter length W;
a second encoding submodule used to determine a second encoding value according to the parameter length W, the first information, the second information, and the third information;
a third encoding submodule used to obtain the indication information according to the first encoding value and the second encoding value.

Optionally, the first encoding submodule is specifically used to determine:

when start_1=0, SIV1=0;
when start_1>=1, $\text{SIV1} = \sum_{i=0}^{\text{start\_1}-1} (\frac{(W+1-i)\times(W-i)}{2})$ ;
wherein start_1 is the first information; i=0, ..., start_1-1; and i is an integer; W is the parameter length; SIV1 is the first encoding value.

Optionally, the first encoding submodule includes:
a first encoding unit used to determine the second encoding value according to the parameter length W, a difference between the second information and the first information, and a distance from the second information to the third information.

Optionally, the first encoding unit is specifically used to:

determine the second encoding value according to the formula: $\text{SIV2} = \text{start} + \sum_{i=1}^{L-1}(N+1-i)$ ;
wherein start is the difference between the second information and the first information; SIV2 is the second encoding value; N is the difference between W and the first information; L is the distance from the second information to the third information; i=1, ..., L-1; and i is an integer; W is the parameter length.

Optionally, the first encoding unit is specifically used to:

when Start=0, determine the second encoding value as L;

when start≥1, determine the second encoding value according to the formula: $L + \sum_{i=1}^{\text{start}}(N + 1 - \text{start})$ ;

wherein start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

Optionally, the first encoding sub-module includes a second encoding unit used to:

in a case where start_3 - start_2 ≤ |(W - *start*_1)/2|, determine the second encoding value according to the formula: SIV2 = *(W - start_1)* (start_3 - start_2) + start_2 - start_1;
in a case where start_3 - start_2 > |(W - *start*_1)/2|, determine the second encoding value according to the formula: SIV2 = *(W - start*_1) (W + start_2 - start_1 - start_3) + (W - 1 - *start*_2);
wherein 0 < start_3 - start_2 + 1 ≤ W - *start*_2; SIV2 is the second encoding value; start_1 is the first information; start_2 is the second information; start_3 is the third information; W is the parameter length.

Optionally, the first encoding sub-module includes a third encoding unit used to:

determine the second encoding value according to the formula: SIV2 = $start\_3 - \text{start\_2} + \sum_{i=1}^{\text{start\_2} - \text{start\_1}}(W + 1 - \text{start\_2})$ ;

wherein start_1 is the first information; start_2 is the second information; start_3 is the third information; W is the parameter length.

Optionally, in the case of M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information;
the encoding module includes:

a fourth encoding submodule used to determine a third encoding value according to the fourth information and the parameter length W;
a fifth encoding submodule used to determine a fourth encoding value according to the fifth information and the parameter length W;
a sixth encoding submodule used to determine a fifth encoding value according to the fourth information, the fifth information, and the sixth information;
a seventh encoding sub-module used to obtain the indication information according to the third encoding value, the fourth encoding value and the fifth encoding value.

Optionally, the fourth encoding submodule is specifically used to determine:

when start_0=0, SIV0=0;

when start_0 ≥ 1, $\text{SIV0} = \sum_{i=0}^{\text{start\_0}-1}\left(\frac{(W-i) \times (W+1-i) * \left(2\ (W-i)+1\right)}{12} + \frac{(W-i)*(W+1-i)}{4}\right)$ ;

wherein start_0 is the fourth information; i=0, ..., start_0-1; and i is an integer; W is the parameter length; SIV0 is the third encoding value.

Optionally, the fifth encoding submodule is specifically used to determine:

when start_1=0, SIV1=0;

when start_1≥1, $\text{SIV1} = \sum_{i=0}^{\text{start\_1}-1}\left(\frac{(W-start\_0+1-i)*(W-start\_0-i)}{2}\right)$ ;

wherein start_1 is the fifth information; i=0, ..., start_1-1; and i is an integer; W is the parameter length; SIV1 is the fourth encoding value.

Optionally, the sixth coding submodule includes:
a fourth encoding unit used to determine a fifth encoding value according to a difference between the fifth information and the fourth information, and a distance from the sixth information to the seventh information.

Optionally, the fourth encoding unit is specifically used to:

determine the fifth encoding value according to the formula: SIV2 = $\text{start} + \sum_{i=1}^{L-1}(N + 1 - i)$;
wherein start is the difference between the fifth information and the fourth information; SIV2 is the fifth encoding value; N is the difference between W and the fourth information; L is the distance from the sixth information and to the seventh information, L≥ 1, and L is an integer; i=1, ..., L-1; and i is an integer.

In a sixth aspect, in order to solve the above technical problem, one embodiment of the present disclosure provides an information transmission device, including:

a receiving module used to receive indication information sent by a network device;
a second determination module used to determine a target encoding length according to a parameter length W and a number M of transmission information; where an encoding length of the indication information is the target encoding length; a value or a value range of a corresponding index value s, of each transmission information in the M transmission information is: $0 \le s \le W\text{-}1$; a value of an n-th transmission information is less than or equal to a value of (n+1)-th transmission information, $1 \le n \le M$, n, M and W are positive integers;
a decoding module used to decode the indication information according to the target encoding length to obtain M pieces of transmission information.

Optionally, the M pieces of transmission information are used to indicate dividing points of M+1 segments of the parameter length W; or,
the M pieces of transmission information are used to indicate M pieces of modulation code scheme (MCS) index information.

Optionally, the second determination module includes:

a third determination sub-module used to determine a first parameter, where the first parameter is used to represent the number of combinations of values of the M pieces of transmission information in a range of 0 to W-1;
a fourth determination sub-module used to determine the target encoding length according to the first parameter.

Optionally, the third determination sub-module is specifically used to:
determine the first parameter according to the parameter length W, the number M of transmission information, and a first algorithm.

Optionally, the first algorithm includes:

when M=3, $\text{the first parameter} = \frac{W*(W+1)*(2W+1)}{12} + \frac{W*(W+1)}{4}$ ; or,

when M=4, $\text{the first parameter} = \frac{W*(W+1)^2*(2W+1)}{12} - \frac{(W*(W+1))^2}{8} +$
$\frac{W*(W+1)*(2W+1)}{24} + \frac{W*(W+1)}{8}$ .

Optionally, the fourth determination sub-module is specifically used to:
determine the target encoding length according to the first parameter and a second algorithm.

Optionally, the second algorithm includes:

the target encoding $\text{length} = \lceil \log_2(\text{first parameter}) \rceil$ .

Optionally, in a case of M=3, the M pieces of transmission information include: first information, second information and third information, and a value of the first information is less than or equal to a value of the second information, and the value of the second information is less than or equal to a value of the third information;
the decoding module includes:

a first decoding submodule used to decode to obtain the first information and a first encoding value corresponding to the first information according to the parameter length W and the target encoding length;

a second decoding submodule used to obtain a second encoding value according to the first encoding value and the target encoding length;

a third decoding submodule used to determine the second information and the third information according to the parameter length W, the first information and the second encoding value.

Optionally, the first decoding sub-module is specifically used to:

within the value range, traverse possible values of the first information, and determine a value that meets a first condition as the first information; the first condition is: $\max \left( \sum_{i=0}^{\text{start\_1} - 1} \left( \frac{(W+1-i)*(W-i)}{2} \right) \leq SIV \right)$ ; and, determine the first encoding value according to the formula:

$$SIV1 = \sum_{i=0}^{\text{start\_1} - 1} \left( \frac{(W+1-i)*(W-i)}{2} \right);$$

wherein start_1 is the first information; i=0, ..., start_1-1; and i is an integer; W is the parameter length; SIV1 is the first encoding value; when start_1=0, $\sum_{i=0}^{\text{start\_1} - 1} \left( \frac{(W+1-i)*(W-i)}{2} \right) = 0$ .

Optionally, the second decoding sub-module includes:

a first decoding unit used to obtain a difference between the second information and the first information and a distance from the second information to the third information according to the parameter length W, the first information and the second encoding value.

Optionally, the first decoding unit is specifically used to:

according to the formula: $SIV2 = \text{start} + \sum_{i=1}^{L-1}(N + 1 - i)$ , determine the difference between the second information and the first information and the distance from the second information to the third information;

wherein start is the difference between the second information and the first information; SIV2 is the second encoding value; N is the difference between W and the first information; L is the distance from the second information to the third information; i=1, ..., L-1; and i is an integer; W is the parameter length.

Optionally, the first decoding unit is specifically used to:

according to the formula: $SIV2 = L + \sum_{i=1}^{\text{start}}(N + 1 - \text{start})$ , determine the difference between the second information and the first information, and the distance from the second information to the third information;

wherein when Start=0, the second encoding value is L; start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

In a seventh aspect, in order to solve the above technical problem, one embodiment of the present disclosure provide processor-readable storage medium, including a computer program stored thereon; wherein the computer program is used to cause a processor to perform the information transmission method according to the first aspect or the second aspect.

The beneficial effects of the above technical solution in the present disclosure are as follows.

In the above solution, a target encoding length is determined according to a parameter length W and a number M of transmission information; wherein a value or a value range of a corresponding index value s, of each transmission information in the M transmission information is: 0≤s≤W-1; a value of an n-th transmission information is less than or equal to a value of (n+1)-th transmission information, 1≤n≤M, n, M and W are positive integers; the M pieces of transmission information are encoded to obtain indication information, where a length of the indication information is the target encoding length; the indication information is sent to a user equipment (UE). Through this solution, the encoding length of M pieces of transmission information can be reduced, thereby reducing information transmission overhead and saving air interface resources.

## BRIEF DESCRIPTION OF THE DRAWINGS

FIG. 1 is a schematic diagram of NCR's network topology;

FIG. 2 is a schematic diagram of beams of forwarding link indicated by L1 signaling for NCR;

FIG. 3 is a schematic diagram of time segment and beam indication;

FIG. 4 is a first schematic flowchart of an information transmission method according to an embodiment of the present disclosure;

FIG. 5 is a schematic diagram showing relationship between time segments and multiple transmission information according to an embodiment of the present disclosure;

FIG. 6 is a second schematic flowchart of an information transmission method according to an embodiment of the present disclosure;

FIG. 7 is a first schematic diagram of an information transmission device according to an embodiment of the present disclosure;

FIG. 8 is a second schematic diagram of an information transmission device according to an embodiment of the present disclosure;

FIG. 9 is a block diagram showing hardware structure of a network device according to an embodiment of the present disclosure; and

FIG. 10 is a block diagram showing hardware structure of a user equipment according to an embodiment of the present disclosure.

## DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The parameter length Wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the parameter length Wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the parameter length Wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the parameter length Wireless terminal device through one or more sectors on an air interface, or any other name. The network device is used to exchange a received air frame with an Internet Protocol (IP) packet, and it serves as a router between the parameter length Wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the parameter length Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Content involved in the solution provided in the embodiment of the present disclosure is first introduced hereinafter.

First. Regarding multiple information transmission requirements

1. Smart repeater (SR) dynamically indicates beam information within a period of time.

The so-called smart behavior of the repeater means that the repeater can perform real-time adjustment to a sending or receiving process based on actual needs of a service terminal. Generally, in order to support the real-time adjustment process of the SR, a base station needs to send some auxiliary information or control information to the SR, so the SR is also called a network control repeater (NCR).

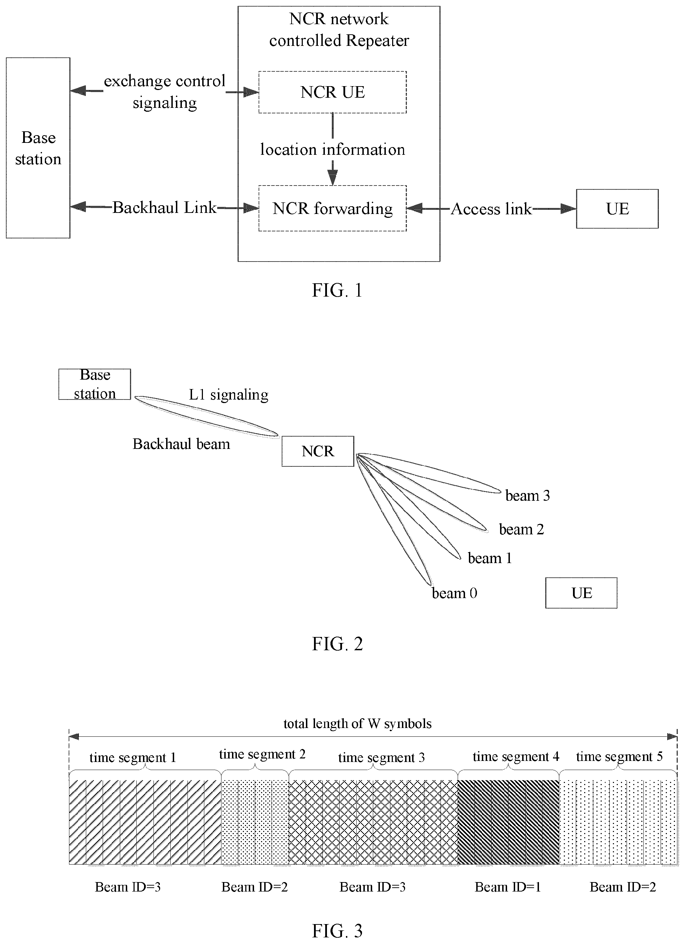

FIG. 1 shows a schematic topology diagram of NCR in the network. As shown in Fig. 1, NCR includes two functional modes: NCR UE (function) and NCR forwarding (function). The NCR UE is used to exchange control signaling with the base station. The control signaling controls forwarding parameters of NCR, such as controlling a beam direction of an access link. The NCR forwarding is used to forward signals from the base station to the UE, and forward signals from the UE to the base station, and relevant forwarding parameters are sent by the NCR UE.

As shown in FIG. 2, between the base station (such as gNB) and the NCR, the beam can be considered to be relatively stable and does not change. An access link between the NCR and the UE can be covered by multiple beams. As the UE moves or the environment changes, the beam direction from the NCR to the UE needs to be adjusted. A beam indication is indicated to the NCR by the base station, that is, the gNB uses control signaling to indicate for the NCR, beam used for forwarding signals. Therefore, how gNB effectively indicates transmission beam information from the NCR to UE to adapt to environmental changes or UE's mobility is a technical problem that needs to be solved.

As shown in FIG. 3, within W symbols, the base station needs to divide the parameter length W symbols into up to 5 time segments (for example, an actual number of period segments can be one of 1, 2, 3, 4, and 5) according to scheduling requirements. Each time segment indicates the corresponding beam information; for example, time segment 1 indicates beam ID=3, time segment 2 indicates beam ID=3, time segment 1 indicates beam ID=2, time segment 3 indicates beam ID=3, and time segment 4 indicates beam ID=2.

It should be pointed out that for the problem of how gNB effectively indicates transmission beam information from the NCR to the UE, this technical solution only solves how to transmit duration of each beam (i.e., time domain information of the beam), and does not solve how to efficiently transmit beam direction information.

2. Modulation code scheme (MCS) indication for multi-carrier scheduling.

Multi-carrier scheduling means that one scheduling signaling DCI can schedule two or more pieces of carrier information. In the scheduling signaling DCI indication, MCS of each carrier data needs to be indicated. In the related art, MCS values includes values ranging from 0 to 31, and related examples are shown in the following Table 1:

Table 1. MCS index table

| MCS index $I_{MCS}$ | modulation order $Q_m$ | target code rate $Rx$ [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |

(continued)

| MCS index $I_{MCS}$ | modulation order $Q_m$ | target code rate $Rx$ [1024] | Spectral efficiency |
|---|---|---|---|
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | reserved | |
| 31 | 6 | reserved | |

As shown in the above table 1, when multi-carrier scheduling is supported, ideally, the MCS value of each scheduled carrier needs to be indicated. For example, when 4 carriers are scheduled, 4 MCS values need to be indicated; when 3 carriers are scheduled, 3 MCS values need to be indicated.

Therefore, in a communication system, considering the scarcity of air interface resources, how to transmit indication of MCS index of multiple scheduled carrier data with minimum overhead are required.

Second. Encoding mode.

In the related art, each piece of information that needs to be indicated is individually coded. It is assumed that an encoding length of each information is a, then for M pieces of information, a×M bits need to be transmitted in total.

For example, for gNB indicating multiple time information of NCR, it is assumed that a duration range is W, an encoding length of each segment is: $\left\lceil \log_2 \ (W * (W + 1)/2 \right\rceil$ , and an encoding mode uses a start and length indicator value (SLIV) encoding method, where $\lceil . \rceil$ means rounding up, such as $\lceil 2.3 \rceil = 3$ . Then, an encoding length required to indicate M time segments is: $M \times \left\lceil \log_2 \ (W * (W + \ 1)/2 \right\rceil$ bits.

For another example, for multi-carrier scheduling, it is assumed that an indication range of MCS is 0 to 31, then an encoding length for each MCS indication is: $\lceil \log_2 (32) \rceil = 5$, where $\lceil \cdot \rceil$ means rounding up, such as $\lceil 2.3 \rceil = 3$. Then, an encoding length required for indicating MCS of 4 scheduled carriers is: $4 \times 5 = 20$ bits.

Specifically, the SLIV encoding method is as follows:
assuming that L is a length of each time segment, $1 \leq L \leq W$; S is a starting point position of each time segment ($0 \leq S \leq W-1$), then the SLIV encoding method is as follows:

$$\text{If } (L - 1) \leq \lceil W/2 \rceil \text{ then}$$

$$\text{SLIV} = W \times (L - 1) + S$$

$$\text{else}$$

$$\text{SLIV} = W \times (W - L + 1) + (W - 1 + S)$$

In the above encoding process, $0 \leq L \leq W-S$.

In summary, it can be seen that in the related art, each transmission information is encoded separately, which results in relatively large overhead and a waste of air interface resources.

In view of this, embodiments of the present disclosure provide an information transmission method and apparatus, network device and UE to solve the problem of how to reduce information transmission overhead and save air interface resources when performing multiple information transmission.

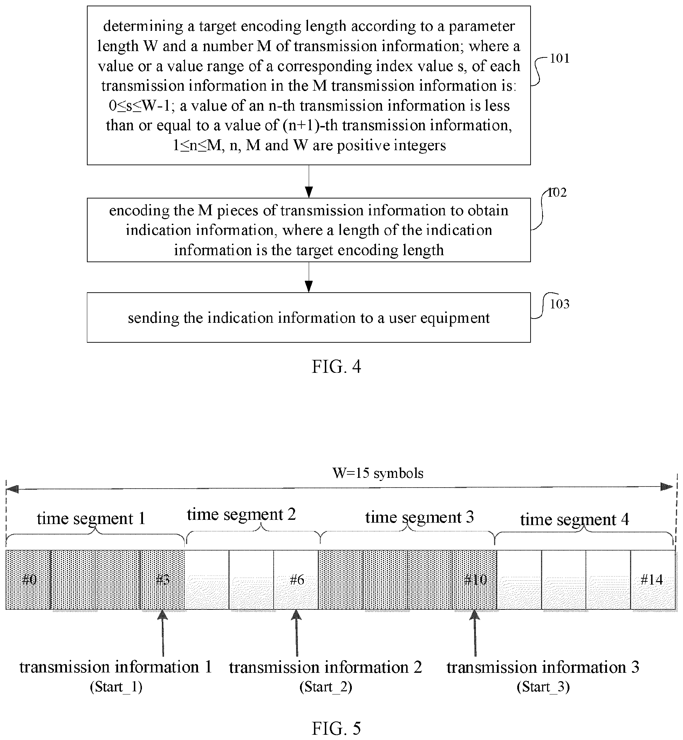

Referring to FIG. 4, one embodiment of the present disclosure provides an information transmission method, which is applied to a network device and includes the following steps.

Step 101: determining a target encoding length according to a parameter length W and a number M of transmission information; where a value or a value range of a corresponding index value $s$, of each transmission information in the M transmission information is: $0 \leq s \leq W-1$; a value of an n-th transmission information is less than or equal to a value of (n+1)-th transmission information, $1 \leq n \leq M$, n, M and W are positive integers.

In this step, the value of the n-th transmission information is less than or equal to the value of the (n+1)-th transmission information. For example, when M=3, there are three pieces of transmission information including: start_1, start_2, and start_3, and $0 \leq \text{start\_1} < \text{start\_2} < \text{start\_3} \leq W-1$; or, $0 \leq \text{start\_1} \leq \text{start\_2} \leq \text{start\_3} \leq W-1$.

The M pieces of transmission information are used to indicate dividing points of M+1 segments of the parameter length W; or,
the M pieces of transmission information are used to indicate M pieces of modulation code scheme (MCS) index information.

Optionally, the dividing points of the M+1 segments may be symbol values, slot values or other data.

For example, in a specific application scenario, the parameter length W is the number of symbols. In FIG. 5, W=15 symbols, M=3, there are a total of 3 pieces if transmission information including: start_1, start_2, start_3; start_1, start_2, start_3 are specific symbol indexes respectively, and indicate dividing points of 4 time segments over a length of 15 symbols. Specifically, from 0 to start_1 is a time segment 1; from start_1 to start_2 is a time segment 2; from start_2 to start_3 is a time segment 3; from start3_ to start_4 is a time segment 4.

Exemplarily, in another specific application scenario, W is a value length of an MCS index, for example, W=32, and the transmission information is M pieces of MCS index information (for example, M=3, and the transmission information is: start_1, start_2, start_3), the relationship between the three pieces of transmission information is: 0<=start_1<=start_2<=start_3<=W-1, where start_1 corresponds to scheduled first carrier data, start_2 corresponds to scheduled second carrier data, and start_3 corresponds to scheduled third carrier data. It is to be pointed out that start_1, start_2, and start_3 here correspond to indication index of MCS.

Step 102: encoding the M pieces of transmission information to obtain indication information, where a length of the indication information is the target encoding length.

Optionally, the indication information is obtained by jointly encoding the M pieces of transmission information.

In this step, by jointly encoding the M pieces of transmission information, the encoding length of the M pieces of transmission information can be reduced, and indication information with a smaller encoding length can be obtained.

Step 103: sending the indication information to a user equipment (UE).

By receiving the parameter length W and the number M of transmission information configured by the network device, the UE can obtain that the length of the indication information is the target encoding length, and then the UE can decode the indication information based on the target encoding length to obtain M pieces of transmission information.

The above step 101 is introduced hereinafter.

In one embodiment, the above step 101 includes:

determining a first parameter; where the first parameter is used to represent the number of combinations of values of the M pieces of transmission information in a range of 0 to W-1;
determining the target encoding length according to the first parameter.

For example, when W=4, M=3, the three pieces of transmission information are: start_1, start_2, start_3, and $0 \leq start\_1 \leq start\_2 \leq start\_3 \leq 3$, then when start_1=0, there are 10 possible values for start_2 and start_3; when start_1=1, there are 6 possible values for start_2 and start_3; when start_1=2, there are 3 possible values for start_2 and start_3; when start_1=3, there is 1 possible value for start_2 and start_3. It can be seen that when W=4 and M=3, the first parameter=10+6+3+1=20, that is, there are 20 possible combinations of numerical values. The specific values can be found in Table 4 in the following example 1.

For example, when W=6, M=3, the three pieces of transmission information are: start_1, start_2, start_3, and $0 \leq start\_1 < start\_2 < start\_3 \leq 3$, then when start_1=0, there are 10 possible values for start_2 and start_3; when start_1=1, there are 6 possible values for start_2 and start_3; when start_1=2, there are 3 possible values for start_2 and start_3; when start_1=3, there is 1 possible value for start_2 and start_3. It can be seen that when W6 and M=3, the first parameter=10+6+3+1=20, that is, there are 20 possible combinations of numerical values. The specific values can be found in Table 6 in the following example 2.

For example, when W=3, M=4, the four pieces of transmission information are: start_0, start_1, start_2, start_3, and $0 \leq start\_0 \leq start\_1 \leq start\_2 \leq start\_3 \leq W-1$, then when start_0=0, there are 10 possible values for start_1, start_2 and start_3; when start_0=1, there are 6 possible values for start_1, start_2 and start_3; when start_0=2, there are 3 possible values for start_1, start_2 and start_3. It can be seen that when W=3 and M=4, the first parameter=10+4+1=15 types. That is, there are 15 possible combinations of numerical values. The specific values can be found in Table 8 in the following example 3.

In one embodiment, the determining the first parameter includes:
determining the first parameter according to the parameter length W, the number M of transmission information, and a first algorithm.

The first algorithm includes:

when M=3, $\text{the first parameter} = \frac{W*(W+1)*(2W+1)}{12} + \frac{W*(W+1)}{4}$ ; or,

when M=4, $\text{the first parameter} = \frac{W*(W+1)^2*(2W+1)}{12} - \frac{\left(W*(W+1)\right)^2}{8} + \frac{W*(W+1)*(2W+1)}{24} + \frac{W*(W+1)}{8}$ .

In this embodiment, the first algorithm can summarize to obtain the above formula by exhaustively enumerating values of each transmission information for the cases of M=3 and M=4 respectively.

For example, according to position relationship $(0 \leq start\_1 \leq start\_2 \leq start\_3 \leq W-1)$ of three pieces of transmission information that need to be indicated, the following combinations of start_1 can be obtained:

when start_1=0, values of start_2 and start_3 are W*(W+1)/2=10 types;
when start_1=1, values of start_2 and start_3 are W*(W-1)/2=6 types;
when start_1=2, values of start_2 and start_3 are (W-1)*(W-2)/2=3 types;
when start_1=3, values of start_2 and start_3 are (W-2)*(W-3)/2=1 type.

Further, it can be obtained that when M=3, the number of combinations of values of the three pieces of transmission information is:

$$\sum_{i=0}^{W-1}\left(\frac{(W+1-i)*(W-i)}{2}\right) = \frac{W*(W+1)*(2W+1)}{12} + \frac{W*(W+1)}{4}.$$

In one embodiment, the determining the target encoding length according to the first parameter, includes:
determining the target encoding length according to the first parameter and a second algorithm.

The second algorithm includes:

the target encoding

$$\text{the target encoding length}=\lceil \log_2(\text{first parameter})\rceil.$$

Specifically, when M=3, the target encoding

$$\text{the target encoding length}=\Big\lceil \log_2 (\frac{W*(W+1)*(2W+1)}{12} + \frac{W*(W+1)}{4})\Big\rceil;$$

when M=4, the target encoding

$$\text{the target encoding length}=\Big\lceil \log_2 (\frac{W*(W+1)^2*(2W+1)}{12} - \frac{(W*(W+1))^2}{8} + \frac{W*(W+1)*(2W+1)}{24} + \frac{W*(W+1)}{8})\Big\rceil.$$

In this embodiment, the target encoding $\text{length}=\lceil \log_2(\text{first parameter})\rceil$ can calculate a maximum number of binary digits that can represent the first parameter.

**In** the above embodiment, by encoding correlation between the M pieces of transmission information, the information transmission overhead can be reduced and the transmission efficiency can be improved.

For example, when M=3, three pieces of transmission information (start_1, start_2, start_3) are included. When the relationship between the three pieces of transmission information is 0≤start_1≤start_2≤start_3≤W-1, taking W=14 as an example, the number of bits required by the traditional encoding method is: $3 * \Big\lceil \log_2 \big(\frac{W*(W+1)}{2}\big)\Big\rceil = 21$; while the number of bits required by the encoding method of the present disclosure is: $\Big\lceil \log_2 (\frac{W*(W+1)*(2W+1)}{12} + \frac{W*(W+1)}{4})\Big\rceil=10$ bits, that is, 11 bits are saved.

For example, when M=4, four pieces of transmission information (start_0, start_1, start_2, start_3) are included. When the relationship between the four pieces of transmission information is 0≤start_0≤start_1≤start_2≤start_3≤W-1, taking W=14 as an example, the number of bits required by the traditional method is: $4 * \Big\lceil \log_2 \big(\frac{W*(W+1)}{2}\big)\Big\rceil = 28$; while the number of bits required by the encoding method of the present disclosure is: $\Big\lceil \log_2 (\frac{W*(W+1)^2*(2W+1)}{12} - \frac{(W*(W+1))^2}{8} + \frac{W*(W+1)*(2W+1)}{24} + \frac{W*(W+1)}{8})\Big\rceil =12$ bits, that is, 16 bits are saved.

The above step 102 is introduced hereinafter with two situations.

Situation one:

M=3, the three pieces of transmission information include: first information, second information and third information, and a value of the first information is less than or equal to a value of the second information, and the value of the second information is less than or equal to a value of the third information.

The above step 102 includes:

determining a first encoding value according to the first information and the parameter length W;
determining a second encoding value according to the parameter length W, the first information, the second information and the third information;
obtaining the indication information according to the first encoding value and the second encoding value.

In this embodiment, the indication information can be calculated based on the first encoding value and the second encoding value, such as, simply, the indication information is a sum of the first encoding value and the second encoding value.

In one embodiment, the determining a first encoding value according to the first information and the parameter length W, includes:

when start_1=0, SIV1=0; or,

when start_1≥1, $SIV1 = \sum_{i=0}^{start\_1-1} \left( \frac{(W+1-i)*(W-i)}{2} \right)$;

where start_1 is the first information; i=0,..., start_1-1; and i is an integer; W is the parameter length; SIV1 is the first encoding value.

In this embodiment, an encoding relationship between the first encoding value SIV1 and the first information start_1 is defined.

Specifically, the determining a second encoding value according to the parameter length W, the first information, the second information, and the third information, includes the following two modes.

Mode one:

in one embodiment, the determining a second encoding value according to the parameter length W, the first information, the second information, and the third information includes:

determining the second encoding value according to the parameter length W, a difference between the second information and the first information, and a distance from the second information to the third information.

In this embodiment, the difference between the second information and the first information is equivalent to a starting position of the second information relative to the first information; and the distance from the second information to the third information can be a difference between the third information and the second information plus 1. Specifically, the distance from the second information to the third information is L=start_3-star_2+1, where start_3 is the third information, and star_2 is the second information.

Specifically, the mode one includes the following two embodiments.

In one embodiment, the determining the second encoding value according to a difference between the second information and the first information and a distance from the second information to the third information, includes:

determining the second encoding value according to the formula:

$$SIV2 = start + \sum_{i=1}^{L-1}(N+1-i);$$

where start is the difference between the second information and the first information; SIV2 is the second encoding value; N is the difference between W and the first information; L is the distance from the second information to the third information; i=1, ..., L-1; and i is an integer; W is the parameter length.

In this embodiment, the start is encoded in the low bit, and the L is encoded in the high bit.

In another embodiment, the determining the second encoding value according to a difference between the second information and the first information and a distance from the second information to the third information, includes:

when Start=0, the second encoding value is L;

when start≥1, determining the second encoding value according to the formula: $L + \sum_{i=1}^{start}(N+1-start)$;

where start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

In this embodiment, the start is encoded in the high bit and the L is encoded in the low bit.

For example, taking W=5 and start_1=0 as an example, the relationship between the above input information (start and L) and the second encoding value SIV2 is as shown in the following Table 2:

Table 2

| N | start | L | SIV2 |
|---|-------|---|------|
| 5 | 0 | 0 | 0 |
| 5 | 0 | 1 | 1 |
| 5 | 0 | 2 | 2 |

(continued)

| N | start | L | SIV2 |
|---|-------|---|------|
| 5 | 0 | 3 | 3 |
| 5 | 0 | 4 | 4 |
| 5 | 1 | 0 | 5 |
| 5 | 1 | 1 | 6 |
| 5 | 1 | 2 | 7 |
| 5 | 1 | 3 | 8 |
| 5 | 2 | 0 | 9 |
| 5 | 2 | 1 | 10 |
| 5 | 2 | 2 | 11 |
| 5 | 3 | 0 | 12 |
| 5 | 3 | 1 | 13 |
| 5 | 4 | 0 | 14 |

Mode two

In one embodiment, the determining the second encoding value according to the parameter length W, the first information, the second information, and the third information, includes:

in a case where $L - 1 \leq \lceil N/2 \rceil$, determining the second encoding value according to the formula: SIV2 = N × (L - 1) + S;

in a case where $L - 1 > \lceil N/2 \rceil$, determining the second encoding value according to the formula: SIV2 = N × (N - L + 1) + (N - 1 - S);

where S is a difference between the second information and the first information; L is a distance from the second information to the third information; N is a difference between W and the first information; SIV2 is the second encoding value; *start*_1 is the first information; *start*_2 is the second information; *start*_3 is the third information; W is the parameter length. That is, S= $start_2$ - *start*_1 ; L= $start_3$ - $start_2$ + 1; N = W - *start*_1.

In this embodiment, the second encoding value is determined based on the SLIV encoding method.

For example, by taking W=5 and start_1=0 as an example, the relationship between the above input information (N, S, L) and the second encoding value SIV2 is as shown in the following Table 3.

Table 3

| N | S | L | SIV2 |
|---|---|---|------|
| 5 | 0 | 1 | 0 |
| 5 | 0 | 2 | 5 |
| 5 | 0 | 3 | 10 |
| 5 | 0 | 4 | 14 |
| 5 | 0 | 5 | 9 |
| 5 | 1 | 1 | 1 |
| 5 | 1 | 2 | 6 |
| 5 | 1 | 3 | 11 |
| 5 | 1 | 4 | 13 |
| 5 | 2 | 1 | 2 |
| 5 | 2 | 2 | 7 |

(continued)

| N | S | L | SIV2 |
|---|---|---|------|
| 5 | 2 | 3 | 12 |
| 5 | 3 | 1 | 3 |
| 5 | 3 | 2 | 8 |
| 5 | 4 | 1 | 4 |

It is to be noted that if start3, start_2, start_1 and W are used to directly express the encoding method, it is expressed as:

in a case where start_3 - start_2 ≤ |(*W* - *start*_1)/2|, determining the second encoding value according to the formula: SIV2 = (*W* - *start*_1) (start_3 - start_2) + start_2 - start_1;
in a case where start_3 - start_2 > |(*W* - *start*_1)/2|, determining the second encoding value according to the formula: SIV2 = (*W* - *start*_1) (W + start_2 - start_1 - start_3) + (*W* - 1 - *start*_2);
where 0 < start_3 - start_2+1 ≤ *W* - *start*_2; SIV2 is the second encoding value; start_1 is the first information; start_2 is the second information; start_3 is the third information; W is the parameter length.

Mode three

In one embodiment, the determining the second encoding value according to the parameter length W, the first information, the second information, and the third information, includes:

determining the second encoding value according to the formula:

$$\text{SIV2} = start\_3 - \text{start}\_2 + \sum_{i=1}^{\text{start}\_2 - \text{start}\_1}(W + 1 - \text{start}\_2);$$

where start_1 is the first information; start_2 is the second information; start_3 is the third information; W is the parameter length.

Situation two:

M=4, the four pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information, that is, 0≤ the value of the fourth information ≤ the value of the fifth information ≤ the value of the sixth information ≤ the value of the seventh information ≤ W-1.

The above step 102 includes:

determining a third encoding value according to the fourth information and the parameter length W;
determining a fourth encoding value according to the fifth information and the parameter length W;
determining a fifth encoding value according to the fourth information, the fifth information and the sixth information;
obtaining the indication information according to the third encoding value, the fourth encoding value and the fifth encoding value.

In this embodiment, the indication information can be calculated based on the third encoding value, the fourth encoding value and the fifth encoding value. For example, simply, the indication information is a sum of the third encoding value, the fourth encoding value and the fifth encoding value.

In one embodiment, determining the third encoding value according to the fourth information and the parameter length W, includes:

when start_0=0, SIV0=0;

when start_0 ≥ 1, $$\text{SIV0} = \sum_{i=0}^{\text{start}\_0 - 1}\left(\frac{(W-i) \times (W+1-i) * \left(2\ (W-i)+1\right)}{12} + \frac{(W-i)*(W+1-i)}{4}\right);$$

where start_0 is the fourth information; i=0, ..., start_0-1; and i is an integer; W is the parameter length; SIV0 is the third encoding value.

In this embodiment, an encoding relationship between the third encoding value SIV0 and the fourth information start_0 is defined.

In one embodiment, the determining the fourth encoding value according to the fifth information and the parameter length W, includes:

when start_1=0, SIV1=0;

when start_1≥1, $SIV1=\sum_{i=0}^{start\_1-1}(\frac{(W-start\_0+1-i)*(W-start\_0-i)}{2})$;

where start_1 is the fifth information; i=0, ..., start_1-1; and i is an integer; W is the parameter length; SIV1 is the fourth encoding value.

In this embodiment, an encoding relationship between the fourth encoding value SIV1 and the fifth information start_1 is defined.

In one embodiment, the determining the fifth encoding value according to the fourth information, the fifth information and the sixth information, includes:

determining the fifth encoding value according to a difference between the fifth information and the fourth information, and a distance from the sixth information to the seventh information.

In this embodiment, the difference between the fifth information and the fourth information is equivalent to a starting position of the fifth information relative to the fourth information; and the distance from the sixth information to the seventh information can be a difference between the seventh information and the sixth information plus 1. Specifically, the distance from the sixth information to the seventh information is L=start_3-star_2+1, where start_3 is the seventh information, and star_2 is the sixth information.

Specifically, the determining the fifth encoding value according to a difference between the fifth information and the fourth information, and a distance from the sixth information to the seventh information, includes:

determining the fifth encoding value according to the formula: $SIV2 = start + \sum_{i=1}^{L-1}(N+1-i)$;

where start is the difference between the fifth information and the fourth information; SIV2 is the fifth encoding value; N is the difference between W and the fourth information; L is the distance from the sixth information and to the seventh information, L≥ 1, and L is an integer; i=1, ..., L-1; and i is an integer.

In this embodiment, the start is encoded in the low bit and the L is encoded in the high bit.

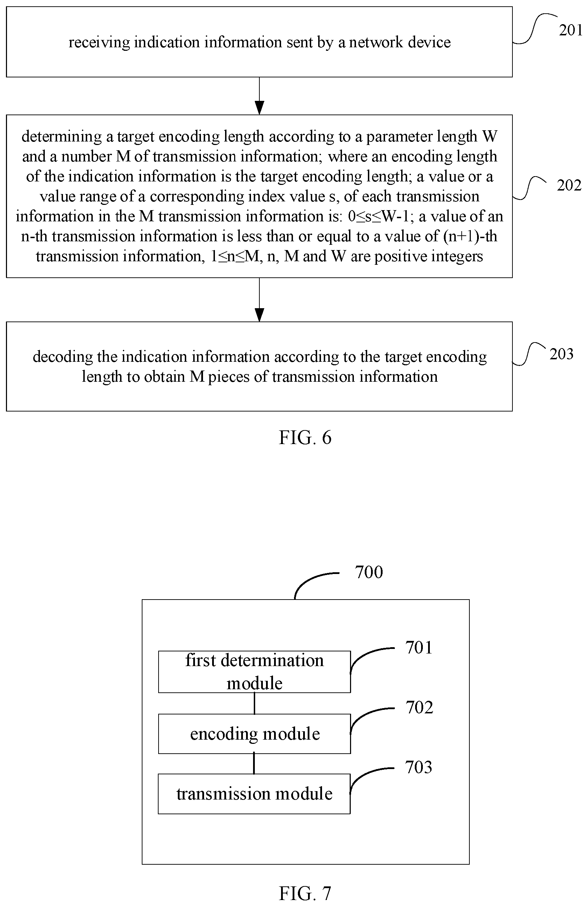

Referring to FIG. 6, one embodiment of the present disclosure provides an information transmission method, which is applied to a UE and includes the following steps:

Step 201: receiving indication information sent by a network device;

Step 202: determining a target encoding length according to a parameter length W and a number M of transmission information; where an encoding length of the indication information is the target encoding length; a value or a value range of a corresponding index value s, of each transmission information in the M transmission information is: 0≤s≤W-1; a value of an n-th transmission information is less than or equal to a value of (n+1)-th transmission information, 1≤n≤M, n, M and W are positive integers.

The M pieces of transmission information are used to indicate dividing points of M+1 segments of the parameter length W; or, the M pieces of transmission information are used to indicate M pieces of modulation code scheme (MCS) index information.

Exemplarily, in a specific application scenario, the parameter length W is the number of symbols. In FIG. 5, W=15 symbols, M=3, there are a total of 3 pieces if transmission information including: start_1, start_2, start_3; start_1, start_2, start_3 indicate dividing points of 4 time segments over a length of 15 symbols. Specifically, from 0 to start_1 is a time segment 1; from start_1 to start_2 is a time segment 2; from start_2 to start_3 is a time segment 3; from start3_ to start_4 is a time segment 4.

Exemplarily, in another specific application scenario, W is a value length of an MCS index, for example, W=32, and the transmission information is M pieces of MCS index information (for example, M=3, and the transmission information is: start_1, start_2, start_3), the relationship between the three pieces of transmission information is: 0<=start_1<=start_2<=start_3<=W-1, where start_1 corresponds to scheduled first carrier data, start_2 corresponds to scheduled second carrier data, and start_3 corresponds to scheduled third carrier data. It is to be pointed out that start_1, start_2, and start_3 here correspond to indication index of MCS.

Step 203: decoding the indication information according to the target encoding length to obtain M pieces of transmission information.

In one embodiment, the above step 202 includes:

determining a first parameter; where the first parameter is used to represent the number of combinations of values of the M pieces of transmission information in a range of 0 to W-1;
determining the target encoding length according to the first parameter.

For example, when W=4, M=3, the three pieces of transmission information are: start_1, start_2, start_3, and $0 \leq$ start_1$\leq$start_2$\leq$start_3$\leq$3, then when start_1=0, there are 10 possible values for start_2 and start_3; when start_1=1, there are 6 possible values for start_2 and start_3; when start_1=2, there are 3 possible values for start_2 and start_3; when start_1=3, there is 1 possible value for start_2 and start_3. It can be seen that when W=4 and M=3, the first parameter=10+6+3+1=20, that is, there are 20 possible combinations of numerical values. The specific values can be found in Table 4 in the following example 1.

In one embodiment, the determining the first parameter, includes:
determining the first parameter according to the parameter length W, the number M of transmission information, and a first algorithm.

The first algorithm includes:

when M=3, $\text{the first parameter} = \dfrac{W*(W+1)*(2W+1)}{12} + \dfrac{W*(W+1)}{4}$ ; or,

when M=4, $\text{the first parameter} = \dfrac{W*(W+1)^2*(2W+1)}{12} - \dfrac{(W*(W+1))^2}{8} + \dfrac{W*(W+1)*(2W+1)}{24} + \dfrac{W*(W+1)}{8}$ .

In this embodiment, the first algorithm can summarize to obtain the above formula by exhaustively enumerating values of each transmission information for the cases of M=3 and M=4 respectively.

In one embodiment, the determining the target encoding length according to the first parameter, includes:
determining the target encoding length according to the first parameter and a second algorithm.

The second algorithm includes:

$\text{the target encoding length} = \lceil \log_2(\text{first parameter}) \rceil$ .

Specifically, when M=3, the target encoding $\text{length} = \left\lceil \log_2 \left( \dfrac{W*(W+1)*(2W+1)}{12} + \dfrac{W*(W+1)}{4} \right) \right\rceil$ ;

when M=4, the target encoding $\text{the target encoding length} = \left\lceil \log_2 \left( \dfrac{W*(W+1)^2*(2W+1)}{12} - \dfrac{(W*(W+1))^2}{8} + \dfrac{W*(W+1)*(2W+1)}{24} + \dfrac{W*(W+1)}{8} \right) \right\rceil$ .

In this embodiment, the target encoding $\text{the target encoding length} = \lceil \log_2(\text{first parameter}) \rceil$ can calculate a maximum number of binary digits that can represent the first parameter.

In one embodiment, M=3, the three pieces of transmission information include: first information, second information and third information, and a value of the first information is less than or equal to a value of the second information, and the value of the second information is less than or equal to a value of the third information.

The above step 203 includes:

decoding to obtain the first information and a first encoding value corresponding to the first information according to the parameter length W and the target encoding length;
according to the first encoding value and the target encoding length, obtaining a second encoding value;
determining the second information and the third information according to the parameter length W, the first information and the second encoding value.

In one embodiment, decoding to obtain the first information and a first code value corresponding to the first information according to the parameter length W and the target encoding length includes:

within the value range, traversing possible values of the first information, and determining a value that meets a first condition as the first information; the first condition is: $\max \left( \sum_{i=0}^{\text{start\_1}-1} \left( \frac{(W+1-i)*(W-i)}{2} \right) \leq SIV \right)$ ; and, determining the first encoding value according to the formula:

$$SIV1 = \sum_{i=0}^{\text{start\_1}-1} \left( \frac{(W+1-i)*(W-i)}{2} \right);$$

where start_1 is the first information; i=0, ..., start_1-1; and i is an integer; W is the parameter length; SIV1 is the first encoding value; when start_1=0, $\sum_{i=0}^{\text{start\_1}-1} \left( \frac{(W+1-i)*(W-i)}{2} \right) = 0$ .

For example, assuming W=4, according to the formula: $SIV1 = \sum_{i=0}^{\text{start\_1}-1} \left( \frac{(W+1-i)*(W-i)}{2} \right)$ , the possible SIV1 can be calculated as follows: when start_1=0, SIV1=0; when start_1=1, SIV1=10; when start_1=2, SIV1=16; when start_1=3, SIV1=19. Further, according to the received indication information SIV, all possible start_1 is traversed so that start_1 meets the following condition: taking the largest start_1 so that a calculated SIV1 is less than or equal to SIV, that is, the following formula is satisfied: $\max \left( \sum_{i=0}^{start_1-1} \left( \frac{(W+1-i)*(W-i)}{2} \right) \leq SIV \right)$ . For example, as indicated by the base station, when SIV=8 and start_1=0, SIV1=0 and its corresponding value is closest to and smaller than SVI=8.

In one embodiment, the determining the second information and the third information according to the parameter length W, the first information and the second encoding value, includes:

obtaining a second encoding value according to the indication information and the first encoding value;
obtaining a difference between the second information and the first information and a distance from the second information to the third information according to the parameter length W, the first information and the second encoding value.

In one embodiment, the obtaining a difference between the second information and the first information and a distance from the second information to the third information according to the parameter length W, the first information and the second encoding value, includes:

according to the formula: $SIV2 = start + \sum_{i=1}^{L-1}(N+1-i)$ , determining the difference between the second information and the first information and the distance from the second information to the third information;
where start is the difference between the second information and the first information; SIV2 is the second encoding value; N is the difference between W and the first information; L is the distance from the second information to the third information; i=1, ..., L-1; and i is an integer; W is the parameter length.

Exemplarily, the decoding process of the second information and the third information may include:

Step 1: subtract SIV1 from SIV to get a value of SIV2, that is, SIV2=SIV-SIV1 (such as SIV2=8);

Step 2: determining L and start according to $SIV2 = start + \sum_{i=1}^{L-1}(N+$ 1 - i); where N=W-start_1; which specifically includes:

first, traversing all possible values of L and calculating $\sum_{i=1}^{L-1}(N+1-$ i) = X; (assuming start_1=0, then N=4); for example, when L=1, X=0; when L=2, X=4; when L=3, X=4+3=7; when L=4, X=4+3+2= 9;
secondly, traversing X values corresponding to multiple L, and taking the L value so that X satisfies: 0<SIV2-X≤W-1-star_1;
further, based on the above calculated L value and the corresponding X value, calculating start=SIV2-X.

Step 3: calculating the second information (start_2) and the third information (start_3) based on start and L.

The formula is: start_2=start+start_1; start_3=start_2+L-1.

In one embodiment, the obtaining a difference between the second information and the first information and a distance from the second information to the third information according to the parameter length W, the first information and the second encoding value, includes:

according to the formula: $SIV2 = L + \sum_{i=1}^{start}(N + 1 - start\ )$, determining the difference between the second information and the first information, and the distance from the second information to the third information; wherein when Start=0, the second encoding value is L; start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

Exemplarily, the decoding process of the second information and the third information may include:

Step 1: subtracting SIV1 from SIV to get a value of SIV2, that is, SIV2=SIV-SIV1 (such as SIV2=8);

Step 2: using $SIV2 = L + \sum_{i=1}^{start}(N + 1 - start)$ to determine L and start; where, N=W-start_1; which specifically includes:

first, traversing all possible values of L and calculating $\sum_{i=1}^{start}(N + 1 -$ start) =X, respectively;
second, traversing X values corresponding to multiple L, and taking the L value so that X satisfies: 0<SIV2-X≤W-1-star_1;
further, based on the above calculated L value and the corresponding X value, calculating start=SIV2-X.

Step 3: determining the second information (start_2) and the third information (start_3) based on start and L.

The formula is: start_2=start+start_1; start_3=start_2+L-1.

The encoding and decoding processes in the above information transmission method of the present disclosure will be introduced hereinafter with reference to specific examples 1 to 3.

Example one

For the situation that the parameter length configured and indicated by the base station is W, the number of transmission information is 3, and the 3 pieces of transmission information are: start_1, start_2, start_3, and 0≤start_1≤start_2≤start_3 ≤W-1, the following takes W=4 as an example for introduction.

Step A: determining the number of bits of indication information (i.e., a target encoding length) as: $\left(\left\lceil\log_2\ \left(\frac{W*(W+1)*(2W+1)}{12} + \frac{W*(W+1)}{4}\right)\right\rceil\right)$.

Specifically, the step A includes the following steps:
step A-1, determining the number of combinations of values of the three pieces of transmission information in a way including:

first, according to position relationship of the three pieces of transmission information that need to be indicated (0≤start_1≤start_2≤start_3≤W-1), the following combinations of start_1 can be obtained:

when start_1=0, values of start_2 and start_3 are $\frac{W*(W+1)}{2} = 10$ types;

when start_1 = 1, values of start_2 and start_3 are $\frac{W*(W-1)}{2} = 6$ types;

when start_1=2, values of start_2 and start_3 are $\frac{(W-1)*(W-2)}{2} = 3$ types;

when start_1=3, values of start_2 and start_3 are $\frac{(W-2)*(W-3)}{2} = 1$ type.

Further, it can be obtained that when M=3, the number of combinations of values of the three pieces of transmission information is: $\sum_{i=0}^{W-1}(\frac{(W+1-i)*(W-i)}{2})=\frac{W*(W+1)*(2W+1)}{12}+\frac{W*(W+1)}{4}$ .

Therefore, when W=4, $\frac{W*(W+1)*(2W+1)}{12}+\frac{W*(W+1)}{4}=20$ .

In order to facilitate verification, the values of the three pieces if transmission information when W=4 are listed in the following Table.

Table 4

| serial number | start_1 | start_2 | start_3 | note |
|---|---|---|---|---|
| 0 | 0 | 0 | 0 | start_1=0, a total of 10 combinations |
| 1 | 0 | 0 | 1 | |
| 2 | 0 | 0 | 2 | |
| 3 | 0 | 0 | 3 | |
| 4 | 0 | 1 | 1 | |
| 5 | 0 | 1 | 2 | |
| 6 | 0 | 1 | 3 | |
| 7 | 0 | 2 | 2 | |
| 8 | 0 | 2 | 3 | |
| 9 | 0 | 3 | 3 | |
| 10 | 1 | 1 | 1 | start_1=1, a total of 6 combinations |
| 11 | 1 | 1 | 2 | |
| 12 | 1 | 1 | 3 | |
| 13 | 1 | 2 | 2 | |
| 14 | 1 | 2 | 3 | |
| 15 | 1 | 3 | 3 | |
| 16 | 2 | 2 | 2 | start_1=2, a total of 3 combinations |
| 17 | 2 | 2 | 3 | |
| 18 | 2 | 3 | 3 | |
| 19 | 3 | 3 | 3 | start_1=3, a total of 1 combination |

Step A-2: based on the number of combinations of values of the three pieces of transmission information, obtaining the number of bits required for the indication information as: $\left\lceil \log_2 \ (\frac{W*(W+1)*(2W+1)}{12}+\frac{W*(W+1)}{4})\right\rceil$ .

Therefore, when W=4, the number of bits required for the indication information is: $\left\lceil \log_2 \ (\frac{W*(W+1)*(2W+1)}{12}+\frac{W*(W+1)}{4})\right\rceil = \left\lceil \log_2 \ (20)\right\rceil = 5$ .

Step B: in a case where bits of the indication information are limited to $\left\lceil \log_2 \ (\frac{W*(W+1)*(2W+1)}{12}+\frac{W*(W+1)}{4})\right\rceil = 5$ , determining the indication information SIV. Specifically, the indication information SIV=SIV1+SIV2.

The step B includes the following steps B-1 and B-2:

Step B-1: determining SIV1 based on the value of start_1 and the value of W; which specifically includes:

when start_1=0, SIV1=0;

when start 1 ≥ 1, $\quad SIV1 = \sum_{i=0}^{start\_1-1}(\frac{(W+1-i)\times(W-i)}{2})$ .

Step B-2: determining SIV2 based on (start_2-start_1) and (start_3-star_2+1); which specifically includes:

assuming start=start_2-start_1, L=(start_3-star_2+1; N=W-star_1;

then, $\quad SIV2 = start + \sum_{i=1}^{L-1}(N+1-i)$ , or, $\quad SIV2 =$
$start\_2 - start\_1 + \sum_{i=1}^{start\_3 - star\_2}(W - star\_1 + 1 - i)$ .

From the above steps B-1 and B-2, the following is obtained:

$SIV = SIV2 + SIV1 = start\_2 - start\_1 + \sum_{i=1}^{start\_3 - star\_2}(W - star\_1 + 1 - i) +$

$\sum_{i=0}^{start\_1 - 1}(\frac{(W+1-i)*(W-i)}{2})$ .

In order to facilitate calculation, it can be simplified as:

$\sum_{i=1}^{start_3 - star_2}(W - star_1 + 1 - i) = (W - star\_1 + 1) \times (start_3 - start_2) -$

$(start_3 - start_2 + 1) \times (start_3 - start_2)/2$ .

Further, based on the following Table 5, it can be seen that based on the above SIV determining method, the encoding length of the output indication information SIV can be limited to 5 bits.

Table 5

| serial number | W | start_1 (input) | start2 (input) | start3 (input) | SIV2 | SIV1 | SIV (output) |
|---|---|---|---|---|---|---|---|
| 0 | 4 | 0 | 0 | 0 | 0 | 0 | 0 |
| 1 | 4 | 0 | 0 | 1 | 4 | 0 | 4 |
| 2 | 4 | 0 | 0 | 2 | 7 | 0 | 7 |
| 3 | 4 | 0 | 0 | 3 | 9 | 0 | 9 |
| 4 | 4 | 0 | 1 | 1 | 1 | 0 | 1 |
| 5 | 4 | 0 | 1 | 2 | 5 | 0 | 5 |
| 6 | 4 | 0 | 1 | 3 | 8 | 0 | 8 |
| 7 | 4 | 0 | 2 | 2 | 2 | 0 | 2 |
| 8 | 4 | 0 | 2 | 3 | 6 | 0 | 6 |
| 9 | 4 | 0 | 3 | 3 | 3 | 0 | 3 |
| 10 | 4 | 1 | 1 | 1 | 0 | 10 | 10 |
| 11 | 4 | 1 | 1 | 2 | 3 | 10 | 13 |
| 12 | 4 | 1 | 1 | 3 | 5 | 10 | 15 |
| 13 | 4 | 1 | 2 | 2 | 1 | 10 | 11 |
| 14 | 4 | 1 | 2 | 3 | 4 | 10 | 14 |
| 15 | 4 | 1 | 3 | 3 | 2 | 10 | 12 |
| 16 | 4 | 2 | 2 | 2 | 0 | 16 | 16 |
| 17 | 4 | 2 | 2 | 3 | 2 | 16 | 18 |
| 18 | 4 | 2 | 3 | 3 | 1 | 16 | 17 |

(continued)

| serial number | W | start_1 (input) | start2 (input) | start3 (input) | SIV2 | SIV1 | SIV (output) |
|---|---|---|---|---|---|---|---|
| 19 | 4 | 3 | 3 | 3 | 0 | 19 | 19 |

Next, for the above example 1, a possible decoding process is introduced.

First, it is assumed that the UE has received the parameter length W=4 and the number of transmission information M=3 configured by the base station. The decoding process mainly includes the following steps:

Step C1: the UE determines an information bit length of a received DCI or MAC-CE (i.e., a length of the indication information SIV) according to the formula $\left\lceil \log_2 \left( \frac{W*(W+1)*(2W+1)}{12} + \frac{W*(W+1)}{4} \right) \right\rceil$.

Step C2: according to the information bit length of the indication information, decoding indication information SIV sent by the base station (for example, the indication information is used to indicate (M+1) time segment information). Specifically, it includes the following steps:

Step C2-1: according to the formula $SIV1 = \sum_{i=0}^{start\_1 - 1}\left(\frac{(W+1-i)*(W-i)}{2}\right)$, traversing possible first information start_1 and determining possible values of SIV1.

W=4, then when start_1=0, SIV1=0; when start_1=1, SIV1=10; when start_1=2, SIV1=16; when start_1=3, SIV1=19.

Step C2-2: according to the received SIV, traversing all possible start_1, so that start_1 meets the following condition: $\max \left( \sum_{i=0}^{start_1 - 1}\left(\frac{(W+1-i)*(W-i)}{2}\right) \right) \leq SIV$).

For example, when the base station indicates SIV=8 and start_1=0, SIV1=0 and its corresponding value is closest to and smaller than SVI=8.

Step C3: determining values start and L in a way including:

Step C3-1: first finding a value of SIV2: subtracting SIV1 calculated in the step 1 from SIV, that is, SIV2=SIV-SIV1 (such as SIV2=8);

Step C3-2: determining L and start according to SIV2 = start + $\sum_{i=1}^{L-1}(N + 1 - i)$; where, N=W-start_1; start_1 is parsed out in the step C2-2;

Step C3-3: traversing all possible values of L and calculating $\sum_{i=1}^{L-1}(N + 1 - i) = X$;

assuming start_1=0, then N=4, then when L=1, X=0; when L=2, X=4; when L=3, X=4+3=7; when L=4, X=4+3+2=9;

Step C3-4: traversing X values corresponding to multiple L, so that X satisfies 0<SIV2-X<=W-1-star_1, and calculating L.

For example, start_1=0, W=4, SIV2=8, then when L=3, X=7, satisfying the above conditions.

Step C3-5: calculating start=SIV2-X based on the above calculated L value and the corresponding X value.

That is, L=3, start=8-7=1.

Step C4: calculating start_2 and start_3 based on start and L; where start_2=start+start_1; start_3=start_2+L-1.

That is, start_2=1, start 3=1+3-1=3.

Therefore, a final decoding result is that when SIV=8, the decoding information is: start_1=0, start_2=1; start_3=3.

Step C5: according to start_1, start_2, start_3, determining four segments in W as follows: from 0 to start_1 is a time segment 1; from start_1 to start_2 is a time segment 2; from start_2 to start_3 is a time segment 3; from start3_ to start_4 is a time segment 4.

Example two

The parameter length configured and indicated by the base station is W, the number of transmission information is 3, and the three pieces of transmission information are: start_1, start_2, start_3, and 0 ≤start_1<start_2<start_3≤W-1.

The following takes W=6 as an example for introduction.

Step A: determining the number of bits of the indication information (i.e., a target encoding length) as:

$$\left(\left\lceil \log_2 \ \left(\frac{W*(W+1)*(2W+1)}{12} + \frac{W*(W+1)}{4}\right)\right\rceil\right)$$ .

Specifically, the step A includes the following steps:

Step A-1: determining the number of combinations of values of the three pieces of transmission information.

First, according to relationship between the three pieces of transmission information $(0<=start\_1<start\_2<start\_3<W-1)$, it can be obtained that start_1 has the following situations:

when start_1=0, values of start_2 and start_3 are $\frac{(W-1)*(W-2)}{2} = 10$ types;

when start_1 = 1, values of start_2 and start_3 are $\frac{(W-2)*(W-3)}{2} = 6$ types;

when start_1=2, values of start_2 and start_3 are $\frac{(W-3)*(W-4)}{2} = 3$ types;

when start_1=3, values of start_2 and start_3 are $\frac{(W-4)*(W-5)}{2} = 1$ type.

Further, it can be obtained that when M=3, the number of combinations of values of the three pieces of transmission information is:

$$\sum_{i=0}^{W-3}\left(\frac{(W-1-i)*(W-2-i)}{2}\right)=\frac{(W-1)*(W-2)*(2W-3)}{12} + \frac{(W-1)*(W-2)}{4}.$$

Therefore, when W=6, $\frac{(W-1)*(W-2)*(2W-3)}{12} + \frac{(W-1)*(W-2)}{4} = 20$ .

In order to facilitate verification, when W=6, values of the three pieces of transmission information are listed in the following Table 6.

Table 6

| serial number | start_1 | start_2 | start_3 | note |
|---|---|---|---|---|
| 0 | 0 | 1 | 2 | When start_1=0, a total of 10 combinations |
| 1 | 0 | 1 | 3 | |
| 2 | 0 | 1 | 4 | |
| 3 | 0 | 1 | 5 | |
| 4 | 0 | 2 | 3 | |
| 5 | 0 | 2 | 4 | |
| 6 | 0 | 2 | 5 | |
| 7 | 0 | 3 | 4 | |
| 8 | 0 | 3 | 5 | |
| 9 | 0 | 4 | 5 | |
| 10 | 1 | 2 | 3 | When start_1=1, a total of 6 combinations |
| 11 | 1 | 2 | 4 | |
| 12 | 1 | 2 | 5 | |
| 13 | 1 | 3 | 4 | |
| 14 | 1 | 3 | 5 | |
| 15 | 1 | 4 | 5 | |

(continued)

| serial number | start_1 | start_2 | start_3 | note |
|---|---|---|---|---|
| 16 | 2 | 3 | 4 | When start_1=2, a total of 3 combinations |
| 17 | 2 | 3 | 5 | |
| 18 | 2 | 4 | 5 | |
| 19 | 3 | 4 | 5 | When start_1=3, a total of 1 combination |

Step A-2: based on the number of combinations of values of the three pieces of transmission information, obtaining the number of bits required for the indication information as:

$$\left\lceil \log_2 \; \left( \frac{(W-1) \; *(W-2)*(2W-3)}{12} + \frac{(W-1) \; *(W-2)}{4} \right) \right\rceil .$$

When W=6, the number of bits required for indication information is:

$$\left\lceil \log_2 \; \left( \frac{(W-1) \; *(W-2)*(2W-3)}{12} + \frac{(W-1) \; *(W-2)}{4} \right) \right\rceil = \left\lceil \log_2 \; (20) \right\rceil = 5 .$$

Step B: determining the indication information SIV in a case where the bit length of the indication information is limited to $\left\lceil \log_2 \; \left( \frac{(W-1) \; *(W-2)*(2W-3)}{12} + \frac{(W-1) \; *(W-2)}{4} \right) \right\rceil = 5$ . Specifically, the indication information SIV=SIV1+SIV2.

The step B includes the following steps B-1 and B-2.

Step B-1: determining SIV1 based on the value of start_1 and the value of W, which specifically includes:

when start_1=0, SIV1=0;

when start_1≥1, $SIV1 = \sum_{i=0}^{start\_1-1} \left( \frac{(W-1-i)*(W-2-i)}{2} \right)$ .

Step B-2: determining SIV2 based on (start_2-start_1-1) and (start_3-star2), which specifically includes: assuming start=start_2-start_1-1, L=(start_3-star_2), N=W-1-star_1-1; then

$SIV2 = start + \sum_{i=1}^{L-1}(N+1-i)$ , or SIV2 = start$_2$- start$_1$ - 1 + $\sum_{i=1}^{start_3-star2-1}(W-1-star\_1-i)$ .

Note 1: L in the above formula can be understood as a distance from start_2 as a starting point to start_3, and then subtracting 1; when start_2 is equal to start_3, L=1; when start_2 and start_3 cannot overlap, the minimum value of L is 2. The purpose of subtracting 1 is to start from 1.

Note 2: N in the above formula can be understood as the maximum value that L can take when the start_1 point is determined, and then subtracting 2. Considering that start_2 will not coincide with start_1, it is necessary to subtract 1, and considering that an original length of L is reduced by 1, it also needs to subtract 1 here.

Note 3: start in the above formula is equivalent to the position of star_2 relative to star 1, and then subtracting 1. The purpose is to make offset values of star_2 and start_1 start from 0.

From the above steps B-1 and B-2, the following can be obtained:

$$SIV = SIV2 + SIV1 \; = start\_2 - start\_1 + \sum_{i=1}^{start\_3 - star\_2}(W - 1 - star\_1 - i) + \sum_{i=0}^{start\_1 -1} \left( \frac{(W-1-i)*(W-2-i)}{2} \right).$$

In order to facilitate calculation, it can be simplified as:

$$\sum_{i=1}^{start_3 - star_2}(W - 1 - star\_1 - i) = (W - 1 - star\_1) \times (start_3 - start_2 - 1) \ - (start_3 - start_2 - 1) \times (start_3 - start_2)/2.$$

Further, based on the following Table 7, it can be seen that based on the above SIV determination method, the encoding length of the output indication information SIV can be limited to 5 bits.

Table 7

| serial number | W (parameter) | Start_1 (input) | Start_2 (input) | Start_3 (input) | SIV2 | SIV1 | SIV (output) |
|---|---|---|---|---|---|---|---|
| 0 | 6 | 0 | 1 | 2 | 0 | 0 | 0 |
| 1 | 6 | 0 | 1 | 3 | 4 | 0 | 4 |
| 2 | 6 | 0 | 1 | 4 | 7 | 0 | 7 |
| 3 | 6 | 0 | 1 | 5 | 9 | 0 | 9 |
| 4 | 6 | 0 | 2 | 3 | 1 | 0 | 1 |
| 5 | 6 | 0 | 2 | 4 | 5 | 0 | 5 |
| 6 | 6 | 0 | 2 | 5 | 8 | 0 | 8 |
| 7 | 6 | 0 | 3 | 4 | 2 | 0 | 2 |
| 8 | 6 | 0 | 3 | 5 | 6 | 0 | 6 |
| 9 | 6 | 0 | 4 | 5 | 3 | 0 | 3 |
| 10 | 6 | 1 | 2 | 3 | 0 | 10 | 10 |
| 11 | 6 | 1 | 2 | 4 | 3 | 10 | 13 |
| 12 | 6 | 1 | 2 | 5 | 5 | 10 | 15 |
| 13 | 6 | 1 | 3 | 4 | 1 | 10 | 11 |
| 14 | 6 | 1 | 3 | 5 | 4 | 10 | 14 |
| 15 | 6 | 1 | 4 | 5 | 2 | 10 | 12 |
| 16 | 6 | 2 | 3 | 4 | 0 | 16 | 16 |
| 17 | 6 | 2 | 3 | 5 | 2 | 16 | 18 |
| 18 | 6 | 2 | 4 | 5 | 1 | 16 | 17 |
| 19 | 6 | 3 | 4 | 5 | 0 | 19 | 19 |

It should be pointed out that the decoding process in the above example 2 is similar to the example 1 and can be executed as a reference.

Example three

The parameter length configured and indicated by the base station is W, the number of transmission information is 4, and the 4 pieces of transmission information are: start_0, start_1, start_2, start_3, and $0 \le start\_0 \le start\_1 \le start\_2 \le start\_3 \le W-1$.

The following takes W=3 as an example for introduction.

Step A: determining the number of bits of the indication information (i.e., a target encoding length) as:

$$\left\lceil \log_2 \ \left( \frac{W*(W+1)^2*(2W+1)}{12} - \frac{\left(W*(W+1)\right)^2}{8} + \ \frac{W*(W+1)*(2W+1)}{24} + \frac{W*(W+1)}{8} \right) \right\rceil .$$

Specifically, the step A includes the following steps.

Step A-1: determining the number of combinations of values of the four pieces of transmission information.

First, according to relationship between the four pieces of transmission information $(0 \le start\_0 \le start\_1 \le start\_2 \le start\_3 \le W-1)$, it can be obtained that start_0 has the following situations:

when start_0=0, values of start_1, start_2 and start_3 are $\frac{W*(W+1)*(2W+1)}{12} + \frac{W*(W+1)}{4} = 10$ types;

when start_0 = 1, values of start_1, start_2 and start_3 are $\frac{(W-1)*(W)*(2W-1)}{12} + \frac{(W-1)\ *(W)}{4} = 4$ types;

when start_0=2, values of start_1, start_2 and start_3 are $\frac{(W-2)\ *(W-1)*(2W-3)}{12} + \frac{(W-2)\ *(W-1)}{4} = 1$ type.

Further, it can be obtained that when M=4, the number of combinations of values of the four pieces of transmission information is:

$$\sum_{i=0}^{W-1}\left(\frac{(W-i)*(W+1-i)*(2W+1-2i)}{12} + \frac{(W-i)*(W+1-i)}{4}\right) = \frac{W*(W+1)^2*(2W+1)}{12} - \frac{(W*(W+1))^2}{8} + \frac{W*(W+1)*(2W+1)}{24} + \frac{W*(W+1)}{8}).$$

Therefore, when W=3, $\frac{W*(W+1)^2*(2W+1)}{12} - \frac{(W*(W+1))^2}{8} + \frac{W*(W+1)*(2W+1)}{24} + \frac{W*(W+1)}{8} = 15$.

In order to facilitate verification, when W=3, the values of the four pieces pf transmission information are listed in the following Table 8.

Table 8

| serial number | start_0 | start_1 | start_2 | start_3 | note |
|---|---|---|---|---|---|
| 0 | 0 | 0 | 0 | 0 | start_0=0, 10 combinations |
| 1 | 0 | 0 | 0 | 1 | |
| 2 | 0 | 0 | 0 | 2 | |
| 3 | 0 | 0 | 1 | 1 | |
| 4 | 0 | 0 | 1 | 2 | |
| 5 | 0 | 0 | 2 | 2 | |
| 6 | 0 | 1 | 1 | 1 | |
| 7 | 0 | 1 | 1 | 2 | |
| 8 | 0 | 1 | 2 | 2 | |
| 9 | 0 | 2 | 2 | 2 | |
| 10 | 1 | 1 | 1 | 1 | start_0=1, 4 combinations |
| 11 | 1 | 1 | 1 | 2 | |
| 12 | 1 | 1 | 2 | 2 | |
| 13 | 1 | 2 | 2 | 2 | |
| 14 | 2 | 2 | 2 | 2 | start_0=2, 1combination |

Step A-2: based on the number of combinations of values of the four pieces of transmission information, obtaining the number of bits required for the indication information as: $\left\lceil \log_2\ (\frac{W*(W+1)^2*(2W+1)}{12} - \frac{(W*(W+1))^2}{8} + \frac{W*(W+1)*(2W+1)}{24} + \frac{W*(W+1)}{8}) \right\rceil$;

when w=3, $\left\lceil \log_2 \ \left( \frac{W*(W+1)^2*(2W+1)}{12} - \frac{\left(W*(W+1)\right)^2}{8} + \frac{W*(W+1)*(2W+1)}{24} + \frac{W*(W+1)}{8}\right)\right\rceil = \left\lceil \log_2 \ (15)\right\rceil = 4$.

Step B: in a case where the bit length of the indicated information is limited to

$\left\lceil \log_2 \ \left( \frac{W*(W+1)^2*(2W+1)}{12} - \frac{\left(W*(W+1)\right)^2}{8} + \frac{W*(W+1)*(2W+1)}{24} + \frac{W*(W+1)}{8}\right)\right\rceil = \left\lceil \log_2 \ (15)\right\rceil = 4$, determining the indication information SIV

Specifically, the indication information SIV=SIV0+SIV1+SIV2.

The step B includes the following steps B-1, step B-2 and step B-3.

Step B-1: determining SIV0 based on values of start_0 and W.

When start_0=0, SIV1=0;

when start _0 ≥ 1, $SIV1 = \sum_{i=0}^{start\_0 \ -1}\left(\frac{(W-i)*(W+1-i)*\left(2 \ (W-i)+1\right)}{12} + \frac{(W-i)*(W+1-i)}{4}\right)$.

Step B-2: determining SIV1 based on the value of start _0, the value of start _1 and the value of W.

When start _1=0, SIV1=0;

When start_1 ≥, $SIV1 = \sum_{i=0}^{start\_1 \ -1}\left(\frac{(W-start\_0+1-i)*(W-start\_0-i)}{2}\right)$.

Step B-3: determining SIV2 based on (start_2-start_1-1) and (start_3-star2).

It is assumed that start=start_2-start_1, L=(start_3-star_2+1), N=W-star 1; then $SIV2 = start + \sum_{i=1}^{L-1}(N + 1 - i)$, or SIV2 = start_2 - start_1 + $\sum_{i=1}^{start\_3 \ - \ star\_2}(W - star\_1 + 1 - i)$.

Note 1: L in the above formula can be understood as a distance from start_2 as a starting point to start_3, and when start_2 and start_3 are equal, L=1.

Note 2: N in the above formula can be understood as the maximum value that L can take when star_1 point is determined. For example, when star_1=0, the maximum value of L is W. When star_2=1, the maximum value of L is W-1.

Note 3: start in the above formula is equivalent to the position of star_2 relative to star_1.

From the above steps B-1, B-2 and B-3, the following can be obtained:

$$SIV = SIV2 + SIV1 + SIV0 \ = start\_2 - start\_1 + \sum_{i=1}^{start\_3 \ - \ star\_2}(W - star\_1 + 1 - i) + \sum_{i=0}^{start\_1 \ -1}\left(\frac{(W+1-i)*(W-i)}{2}\right) + \sum_{i=0}^{start\_0 \ -1}\left(\frac{(W-i)*(W+1-i)*\left(2 \ (W-i)+1\right)}{12} + \frac{(W-i)*(W+1-i)}{4}\right).$$

For ease of calculation, it can be simplified as:

$$\sum_{i=1}^{start_3 \ - \ star_2}(W - star_1 + 1 - i)$$

$$= (W - start\_1 + 1) * (start_3 - start_2) \ - (start_3 - start_2 + 1) *$$

$$(start_3 - start_2)/2.$$

Further, the following table shows encoding output results of 4 pieces of information when W=3. Based on the following Table 9, it can be seen that based on the above SIV determination method, the encoding length of the output indication information SIV can be limited to 4 bits.

Table 9

| serial number | W | start_0 | start_1 | start2 | start3 | SIV2 | SIV1 | SIV | SIV0 |
|---|---|---|---|---|---|---|---|---|---|
| 0 | 3 | 0 | 0 | 0 | 0 | 0 | 0 | 0 | 0 |
| 1 | 3 | 0 | 0 | 0 | 1 | 3 | 0 | 3 | 0 |
| 2 | 3 | 0 | 0 | 0 | 2 | 5 | 0 | 5 | 0 |
| 3 | 3 | 0 | 0 | 1 | 1 | 1 | 0 | 1 | 0 |
| 4 | 3 | 0 | 0 | 1 | 2 | 4 | 0 | 4 | 0 |
| 5 | 3 | 0 | 0 | 2 | 2 | 2 | 0 | 2 | 0 |
| 6 | 3 | 0 | 1 | 1 | 1 | 0 | 6 | 6 | 0 |
| 7 | 3 | 0 | 1 | 1 | 2 | 2 | 6 | 8 | 0 |
| 8 | 3 | 0 | 1 | 2 | 2 | 1 | 6 | 7 | 0 |
| 9 | 3 | 0 | 2 | 2 | 2 | 0 | 9 | 9 | 0 |
| 10 | 3 | 1 | 1 | 1 | 1 | 0 | 0 | 10 | 10 |
| 11 | 3 | 1 | 1 | 1 | 2 | 2 | 0 | 12 | 10 |
| 12 | 3 | 1 | 1 | 2 | 2 | 1 | 0 | 11 | 10 |
| 13 | 3 | 1 | 2 | 2 | 2 | 0 | 3 | 13 | 10 |
| 14 | 3 | 2 | 2 | 2 | 2 | 0 | 0 | 14 | 14 |

Next, for the above example three, a possible decoding process is introduced.

First, it is assumed that the UE has received the parameter length W=3 configured by the base station, and the number of transmission information M=5, including: start_0, start_1, start_2, start_3. The decoding process mainly includes the following steps.

Step C1: the UE determines an information bit length (a length of the indication information SIV) of DCI or MAC-CE according to the formula

$$\left\lceil \log_2 \left( \frac{W*(W+1)^2*(2W+1)}{12} - \frac{(W*(W+1))^2}{8} + \frac{W*(W+1)*(2W+1)}{24} + \frac{W*(W+1)}{8} \right) \right\rceil = 4 .$$

Step C2: decoding the indication information SIV sent by the base station according to the information bit length of the indication information.

Step C2-1: determining a possible value of a third encoding value (SIVO) according to the formula:

$$SIV0 = \sum_{i=0}^{start\_0 \, -1} \left( \frac{(W-i)*(W+1-i)*(2\ (W-i)+1)}{12} + \frac{(W-i)*(W+1-i)}{4} \right);$$

W=3, when start_0=0, SIV0=0, when start_0=1, SIV0=10; when start_0=2, SIV0=14.

Step C2-2: according to the received indication information SIV, traversing all possible start_0, so that start_0 meets the following condition:

$$\max \left( \sum_{i=0}^{start_1 \, -1} \left( \frac{(W+1-i)*(W-i)}{2} \right) \leq SIV \right).$$

For example, when the base station indicates SIV=8 and start _0=0, SIV0=0 and its corresponding value is closest to and smaller than SIV, then it can be determined: start_0=0 and SIV0=0.

Step C2-3: based on the start_0 and SIV0 calculated in the step C2-2, further determining SIV1 and start_1.

First, calculating the possible value of SIV1 according to the formula

$$\sum_{i=0}^{start\_1 \, -1} \left( \frac{(W-start\_0+1-i)*(W-start\_0-i)}{2} \right);$$ where W=3, start_0 is the value parsed in the step C2-2; traversing start_1 and obtaining possible SIV0.

For the sake of illustration, if start_0=0, then when start_1=0, SIV0=0; when start_1=1, SIV0=6; when start_1=2, SIV0=9.

Second, using SIV-SIV0 to traverse all possible start_1 so that start_1 satisfies the following condition: max

$$\max \left( \sum_{i=0}^{start_1 \, -1} \left( \frac{(W-start_0+1-i)*(W-start_0-i)}{2} \right) \right) \leq SIV - SIV0).$$

For example, the base station indicates SIV-SIV0=8, then when start_1=1, the corresponding value of SIV0=6 is closest to and smaller than SVI=8. Then it can be determined: start_1=1, SIV1=8.

Step C-3: calculating values start and L.

Step C3-1: calculating SIV2 (such as SIV2=2) according to the formula: SIV2=SIV-SIV0-SIV1;

Step C3-2: using $SIV2 = \text{start} + \sum_{i=1}^{L-1}(N+1-i)$ to calculate L and start; where N=W-start_1 W=3, start_1 is parsed out in the step C2-3. Specifically, it includes:

traversing all possible values of L and calculating $\sum_{i=1}^{L-1}(N+1-i) = X$.

Step C3-21: assuming start_1=1, then N=2, and when L=1, X=0; when L=2, X=2.

Step C3-22: traversing multiple X values corresponding to L, so that X satisfies 0<SIV2-X<=W-1-star_1, and calculating L.

For example, start_1=1, W=3, SIV2=2, then when L=2, X=2, satisfying the above condition.

Step C3-23: calculating start=SIV2-X based on the above calculated L value and the corresponding X value. That is, L=2, start=0.

Step C4: calculating start_2 and start_3 based on start and L; where start_2=start+start_1; start_3=start_2+L-1.

That is, start_2=0+1=1, start_3=1+2-1=2.

In summary, it can be concluded from the above steps: when the current SIV=8, the decoded 4 pieces of transmission information is: start_0=0, start_1=1, start_2=1, start_3=2.

Step C5: based on information of start_0, start_1, start_2, and start_3, determining the four segments in W as follows: from 0 to start_0 is a time segment 0; from start_0 to start_1 is a time segment 1; from start_1 to start_2 is a time segment 2; from start_2 to start_3 is a time segment 3; from start3_ to start 4 is a time segment 4.

Example four: for the scheme in which SIV2 in the examples 1 and 2 is encoded using the SLIV method, the following decoding example is given:

for the SIV2 encoding scheme in the examples 1 and 2 using the SLIV method, a decoding example is provided as follows.

The UE receives indication information sent by the base station and parses a value of SIV2 according to the first and second embodiments. The following describes the process of decoding S and L via SIV2, which mainly includes the following steps.

Step 1: dividing SIV2 by N, adding an integer part and a remainder part, and obtaining decode1; that is,

$decode1 = \lfloor SIV2/N \rfloor + mod(SIV2, N)$.

Step 2: determining values of L and S according to decode1.

Specifically, if decode1 ≤N-1 (note: decode1=L+S-1), then $L = \lfloor SIV2/\ N \rfloor + 1$, S=mode(SIV2,N);

otherwise (i.e., decode1>N-1) (note: decode1=2N-(L+S)), then $L = N - \lfloor SIV2/N \rfloor + 1$, S=N - mod(SIV2, N) - 1.

In the above formula, mod() means finding the remainder, and $\lfloor . \rfloor$ means rounding down.

Referring to FIG. 7, one embodiment of the present disclosure provides an information transmission device 700, including:

a first determination module 701 used to determine a target encoding length according to a parameter length W and a number M of transmission information; where a value or a value range of a corresponding index value s, of each transmission information in the M transmission information is: 0 ≤ s ≤ W-1; a value of an n-th transmission information is less than or equal to a value of (n+1)-th transmission information, 1 ≤n≤M, n, M and W are positive integers;

an encoding module 702 used to encode the M pieces of transmission information to obtain indication information, where a length of the indication information is the target encoding length;

a transmission module 703 used to send the indication information to a user equipment (UE).

Optionally, the M pieces of transmission information are used to indicate dividing points of M+1 segments of the parameter length W; or, the M pieces of transmission information are used to indicate M pieces of modulation code scheme (MCS) index information.

Optionally, the first determination module 701 includes:

a first determination sub-module used to determine a first parameter; where the first parameter is used to represent the number of combinations of values of the M pieces of transmission information in a range of 0 to W-1;

a second determination sub-module used to determine the target encoding length according to the first parameter.

Optionally, the first determination sub-module is specifically used to:

determine the first parameter according to the parameter length W, the number M of transmission information, and a first algorithm.

Optionally, the first algorithm includes:

when M=3, the first $\text{the first parameter} = \frac{W*(W+1)*(2W+1)}{12} + \frac{W*(W+1)}{4}$ ; or,

when M=4, the first $\text{the first parameter} = \frac{W*(W+1)^2*(2W+1)}{12} - \frac{(W*(W+1))^2}{8} +$ $\frac{W*(W+1)*(2W+1)}{24} + \frac{W*(W+1)}{8}$ .

Optionally, the second determination sub-module is specifically used to:

determine the target encoding length according to the first parameter and a second algorithm.

Optionally, the second algorithm includes:

the target encoding $\text{the target encoding length} = \lceil \log_2(\text{first parameter}) \rceil$ .

Optionally, in a case where M=3, the M pieces of transmission information include: first information, second information and third information, and a value of the first information is less than or equal to a value of the second information, and the value of the second information is less than or equal to a value of the third information.

The encoding module 702 includes:

a first encoding submodule used to determine a first encoding value according to the first information and the parameter length W;
a second encoding submodule used to determine a second encoding value according to the parameter length W, the first information, the second information, and the third information;
a third encoding submodule used to obtain the indication information according to the first encoding value and the second encoding value.

Optionally, the first encoding submodule is specifically used to determine:

when start_1=0, SIV1=0;

when start_1>=1, $SIV1 = \sum_{i=0}^{\text{start\_1}-1} \left( \frac{(W+1-i) \times (W-i)}{2} \right)$ ;
wherein start_1 is the first information; i=0, ..., start_1-1; and i is an integer; W is the parameter length; SIV1 is the first encoding value.

Optionally, the first encoding submodule includes:

a first encoding unit used to determine the second encoding value according to the parameter length W, a difference between the second information and the first information, and a distance from the second information to the third information.

Optionally, the first encoding unit is specifically used to:

determine the second encoding value according to the formula: $SIV2 = \sum_{i=1}^{L-1}(N+1-i)$ ;
where start is the difference between the second information and the first information; SIV2 is the second encoding value; N is the difference between W and the first information; L is the distance from the second information to the third information; i=1, ..., L-1; and i is an integer; W is the parameter length.

Optionally, the first encoding unit is specifically used to:

when Start=0, determine the second encoding value as L;

when start ≥ 1, determine the second encoding value according to the formula: $L + \sum_{i=1}^{\text{start}}(N+1-\text{start})$ ;

where start is the difference between the second information and the first information; SIV2 is the second encoding value; N is the difference between W and the first information; L is the distance from the second information to the third information, L ≥ 1, and L is an integer; i=1, ..., L-1; and i is an integer; W is the parameter length.

Optionally, the first encoding sub-module includes a second encoding unit used to:

in a case where start_3 - start_2 ≤ |(*W* - *start*_1)/2|, determine the second encoding value according to the formula: SIV2 = (*W* - *start*_1) (start_3 - start_2) + start_2 - start_1;
in a case where start_3 - start_2 > |(*W* - *start*_1)/2|, determine the second encoding value according to the formula: SIV2 = (*W* - *start*_1) (W + start_2 - start_1 - start_3) + (*W* - 1 - *start*_2);
where 0 < start_3 - start_2 + 1 ≤ *W* - *start*_2; SIV2 is the second encoding value; start_1 is the first information; start_2 is the second information; start_3 is the third information; W is the parameter length.

Optionally, the first encoding sub-module includes a third encoding unit used to:

determine the second encoding value according to the formula: SIV2 =

$$start\_3 - start\_2 + \sum_{i=1}^{start\_2 - start\_1}(W + 1 - start\_2)$$ ;

where start_1 is the first information; start_2 is the second information; start_3 is the third information; W is the parameter length.

Optionally, in the case of M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information.

The encoding module 702 includes:

a fourth encoding submodule used to determine a third encoding value according to the fourth information and the parameter length W;
a fifth encoding submodule used to determine a fourth encoding value according to the fifth information and the parameter length W;
a sixth encoding submodule used to determine a fifth encoding value according to the fourth information, the fifth information, and the sixth information;
a seventh encoding sub-module used to obtain the indication information according to the third encoding value, the fourth encoding value and the fifth encoding value.

Optionally, the fourth encoding submodule is specifically used to determine:

when start_0=0, SIV0=0;

$$SIV0 = \sum_{i=0}^{start\_0-1}(\frac{(W-i)\times(W+1-i)*(2\ (W-i)+1)}{12} + \frac{(W-i)*(W+1-i)}{4})$$ ;
when start_0 ≥ 1,
where start_0 is the fourth information; i=0, ..., start_0-1; and i is an integer; W is the parameter length; SIV0 is the third encoding value.

Optionally, the fifth encoding submodule is specifically used to determine:

when start_1=0, SIV1=0;

$$SIV1 = \sum_{i=0}^{start\_1-1}(\frac{(W-start\_0+1-i)*(W-start\_0-i)}{2})$$ ;
when start_1 ≥ 1,
where start_1 is the fifth information; i=0, ..., start_1-1; and i is an integer; W is the parameter length; SIV1 is the fourth encoding value.

Optionally, the sixth coding submodule includes:
a fourth encoding unit used to determine a fifth encoding value according to a difference between the fifth information and the fourth information, and a distance from the sixth information to the seventh information.
Optionally, the fourth encoding unit is specifically used to:

determine the fifth encoding value according to the formula: SIV2 = $start + \sum_{i=1}^{L-1}(N+1-i)$ ;
where start is the difference between the fifth information and the fourth information; SIV2 is the fifth encoding value; N is the difference between W and the fourth information; L is the distance from the sixth information and to the seventh information, $L \geq 1$, and L is an integer; i=1, ..., L-1; and i is an integer.

It is to be noted here that the above device provided in the embodiment of the present disclosure can implement all the method steps implemented by the above method embodiment on the third network element side, and can achieve the same technical effect. The parts and beneficial effects of this embodiment that are the same as those of the method embodiment will not be described in detail here.

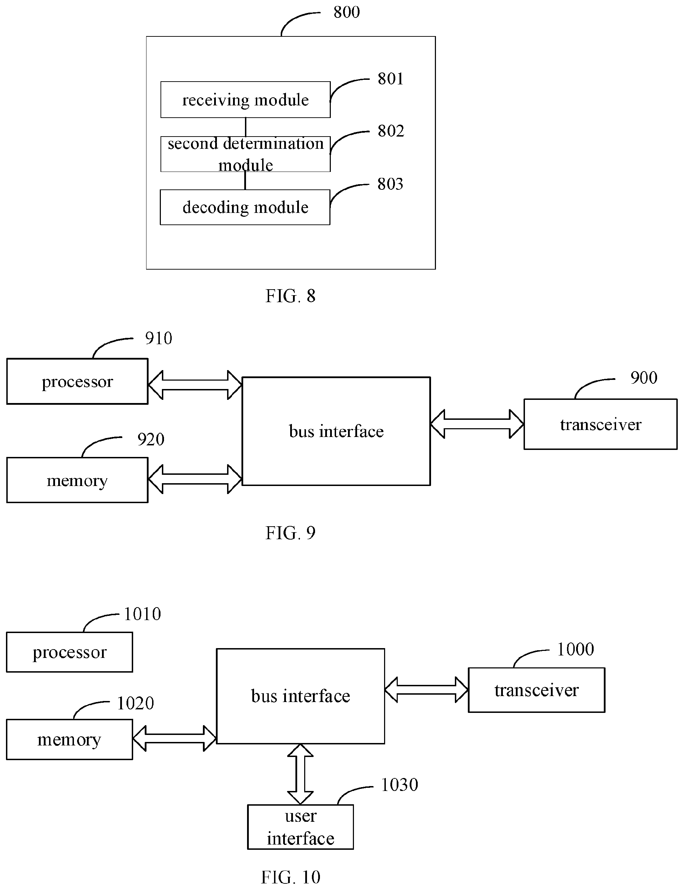

Referring to FIG. 8, one embodiment of the present disclosure provides an information transmission device 800, including:

a receiving module 801 used to receive indication information sent by a network device;

a second determination module 802 used to determine a target encoding length according to a parameter length W and a number M of transmission information; where an encoding length of the indication information is the target encoding length; a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers;

a decoding module 803 used to decode the indication information according to the target encoding length to obtain M pieces of transmission information.

Optionally, the M pieces of transmission information are used to indicate dividing points of M+1 segments of the parameter length W; or,

the M pieces of transmission information are used to indicate M pieces of modulation code scheme (MCS) index information.

Optionally, the second determination module 802 includes:

a third determination sub-module used to determine a first parameter, where the first parameter is used to represent the number of combinations of values of the M pieces of transmission information in a range of 0 to W-1;

a fourth determination sub-module used to determine the target encoding length according to the first parameter.

Optionally, the third determination sub-module is specifically used to:

determine the first parameter according to the parameter length W, the number M of transmission information, and a first algorithm.

Optionally, the first algorithm includes:

when M=3, the first $the\ first\ parameter = \frac{W*(W+1)*(2W+1)}{12} + \frac{W*(W+1)}{4}$ ; or,

when M=4, the first $the\ first\ parameter = \frac{W*(W+1)^2*(2W+1)}{12} - \frac{(W*(W+1))^2}{8} +$

$\frac{W*(W+1)*(2W+1)}{24} + \frac{W*(W+1)}{8}$ .

Optionally, the fourth determination sub-module is specifically used to:

determine the target encoding length according to the first parameter and a second algorithm.

Optionally, the second algorithm includes:

$the\ target\ encoding\ length = \lceil \log_2(first\ parameter) \rceil$

the target encoding .

Optionally, in a case of M=3, the M pieces of transmission information include: first information, second information and third information, and a value of the first information is less than or equal to a value of the second information, and the value of the second information is less than or equal to a value of the third information.

The decoding module 803 includes:

a first decoding submodule used to decode to obtain the first information and a first encoding value corresponding to the first information according to the parameter length W and the target encoding length;

a second decoding submodule used to obtain a second encoding value according to the first encoding value and the target encoding length;

a third decoding submodule used to determine the second information and the third information according to the parameter length W, the first information and the second encoding value.

Optionally, the first decoding sub-module is specifically used to:

within the value range, traverse possible values of the first information, and determine a value that meets a first condition as the first information; the first condition is: $\max \left( \sum_{i=0}^{\text{start\_1}-1} \left( \frac{(W+1-i)*(W-i)}{2} \right) \leq SIV \right)$ ; and, determine the first encoding value according to the formula:

$$\text{SIV1} = \sum_{i=0}^{\text{start\_1}-1} \left( \frac{(W+1-i)*(W-i)}{2} \right);$$

where start_1 is the first information; i=0, ..., start_1-1; and i is an integer; W is the parameter length; SIV1 is the first encoding value; when start_1=0, $\sum_{i=0}^{\text{start\_1}-1} \left( \frac{(W+1-i)*(W-i)}{2} \right) = 0$ .

Optionally, the second decoding sub-module includes:
a first decoding unit used to obtain a difference between the second information and the first information and a distance from the second information to the third information according to the parameter length W, the first information and the second encoding value.

Optionally, the first decoding unit is specifically used to:

according to the formula: $SIV2 = \text{start} + \sum_{i=1}^{L-1}(N + 1 - i)$ , determine the difference between the second information and the first information and the distance from the second information to the third information;
where start is the difference between the second information and the first information; SIV2 is the second encoding value; N is the difference between W and the first information; L is the distance from the second information to the third information; i=1, ..., L-1; and i is an integer; W is the parameter length.

Optionally, the first decoding unit is specifically used to:

according to the formula: $SIV2 = L + \sum_{i=1}^{\text{start}}(N + 1 - \text{start})$ , determine the difference between the second information and the first information, and the distance from the second information to the third information;
where when Start=0, the second encoding value is L; start is the difference between the second information and the first information; SIV2 is the second encoding value; N is the difference between W and the first information; L is the distance from the second information to the third information, L ≥ 1, and L is an integer; i=1, ..., L-1; and i is an integer; W is the parameter length.

It is to be noted here that the above device provided in the embodiment of the present disclosure can implement all the method steps implemented by the above method embodiment on the UE side, and can achieve the same technical effect. The parts and beneficial effects of this embodiment that are the same as those of the method embodiment will not be described in detail here.

Referring to FIG. 9, one embodiment of the present disclosure provides a network device, including: a processor 910; and a memory 920 connected to the processor 910 through a bus interface. The memory 920 is used to store programs and data used by the processor 910 when performing operations. The processor 910 calls and executes the programs and data stored in the memory 920. A transceiver 900 is connected to the bus interface and is used to receive and send data under the control of the processor 910. The processor 910 is used to read the program in the memory 920 and perform the following processes:

determining a target encoding length according to a parameter length W and a number M of transmission information; where a value or a value range of a corresponding index value s, of each transmission information in the M transmission information is: 0≤s≤W-1; a value of an n-th transmission information is less than or equal to a value of (n+1)-th transmission information, 1 ≤n≤M, n, M and W are positive integers;

encoding the M pieces of transmission information to obtain indication information, where a length of the indication information is the target encoding length;

sending the indication information to a user equipment (UE).

Optionally, the M pieces of transmission information are used to indicate dividing points of M+1 segments of the parameter length W; or, the M pieces of transmission information are used to indicate M pieces of modulation code scheme (MCS) index information.

Optionally, the processor 910 is further used to read the program in the memory 920 and perform the following processes:

determining a first parameter; where the first parameter is used to represent the number of combinations of values of the M pieces of transmission information in a range of 0 to W-1;

determining the target encoding length according to the first parameter.

Optionally, the processor 910 is further used to read the program in the memory 920 and perform the following processes:

determining the first parameter according to the parameter length W, the number M of transmission information, and a first algorithm.

Optionally, the first algorithm includes:

when M=3, the first

$$\text{the first parameter}=\frac{W*(W+1)*(2W+1)}{12}+\frac{W*(W+1)}{4}$$

; or,

when M=4, the first

$$\text{the first parameter}=\frac{W*(W+1)^2*(2W+1)}{12}-\frac{(W*(W+1))^2}{8}+$$

$$\frac{W*(W+1)*(2W+1)}{24}+\frac{W*(W+1)}{8}$$

.

Optionally, the processor 910 is further used to read the program in the memory 920 and perform the following processes:

determining the target encoding length according to the first parameter and a second algorithm.

Optionally, the second algorithm includes:

the target encoding

$$\text{the target encoding length}=\lceil\log_2(\text{first parameter})\rceil$$

.

Optionally, in a case where M=3, the M pieces of transmission information include: first information, second information and third information, and a value of the first information is less than or equal to a value of the second information, and the value of the second information is less than or equal to a value of the third information.

Optionally, the processor 910 is further used to read the program in the memory 920 and perform the following processes:

determining a first encoding value according to the first information and the parameter length W;

determining a second encoding value according to the parameter length W, the first information, the second information, and the third information;

obtaining the indication information according to the first encoding value and the second encoding value.

Optionally, the processor 910 is further used to read the program in the memory 920 and perform the following processes:

when start_1=0, SIV1=0;

When start_1>=1, $$\text{SIV1}=\sum_{i=0}^{\text{start}\_1-1}\left(\frac{(W+1-i)\times(W-i)}{2}\right)$$;

wherein start_1 is the first information; i=0, ..., start_1-1; and i is an integer; W is the parameter length; SIV1 is the first encoding value.

Optionally, the processor 910 is further used to read the program in the memory 920 and perform the following processes:

determining the second encoding value according to the parameter length W, a difference between the second information and the first information, and a distance from the second information to the third information.

Optionally, the processor 910 is further used to read the program in the memory 920 and perform the following processes:

determining the second encoding value according to the formula:

$$SIV2 = start + \sum_{i=1}^{L-1}(N + 1 - i);$$

where start is the difference between the second information and the first information; SIV2 is the second encoding value; N is the difference between W and the first information; L is the distance from the second information to the third information; i=1, ..., L-1; and i is an integer; W is the parameter length.

Optionally, the processor 910 is further used to read the program in the memory 920 and perform the following processes:

when Start=0, determining the second encoding value as L;

when start $\geq$ 1, determining the second encoding value according to the formula: $L + \sum_{i=1}^{start}(N + 1 - start)$;

where start is the difference between the second information and the first information; SIV2 is the second encoding value; N is the difference between W and the first information; L is the distance from the second information to the third information, L $\geq$ 1, and L is an integer; i=1, ..., L-1; and i is an integer; W is the parameter length.

Optionally, the processor 910 is further used to read the program in the memory 920 and perform the following processes:

in a case where start_3 - start_2 $\leq$ |(W - start_1)/2|, determining the second encoding value according to the formula: SIV2 = (W - start_1) (start_3 - start_2) + start_2 - start_1;

in a case where start_3 - start_2 > |(W - start_1)/2|, determining the second encoding value according to the formula: SIV2 = (W - start_1) (W + start_2 - start_1 - start_3) + (W - 1 - start_2);

where 0 < start_3 - start_2 + 1 $\leq$ W - start_2; SIV2 is the second encoding value; start_1 is the first information; start_2 is the second information; start_3 is the third information; W is the parameter length.

Optionally, the processor 910 is further used to read the program in the memory 920 and perform the following processes:

determining the second encoding value according to the formula:

$$SIV2 = start\_3 - start\_2 + \sum_{i=1}^{start\_2 - start\_1}(W + 1 - start\_2);$$

where start_1 is the first information; start_2 is the second information; start_3 is the third information; W is the parameter length.

Optionally, in the case of M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information.

Optionally, the processor 910 is further used to read the program in the memory 920 and perform the following processes:

determining a third encoding value according to the fourth information and the parameter length W;
determining a fourth encoding value according to the fifth information and the parameter length W;
determining a fifth encoding value according to the fourth information, the fifth information, and the sixth information;
obtaining the indication information according to the third encoding value, the fourth encoding value and the fifth encoding value.

Optionally, the processor 910 is further used to read the program in the memory 920 and perform the following processes:

when start_0=0, SIV0=0;

when start_0 ≥ 1, $$SIV0 = \sum_{i=0}^{\text{start\_0}-1}(\frac{(W-i)\times(W+1-i)*(2\ (W-i)+1)}{12} + \frac{(W-i)*(W+1-i)}{4});$$

where start_0 is the fourth information; i=0, ..., start_0-1; and i is an integer; W is the parameter length; SIV0 is the third encoding value.

Optionally, the processor 910 is further used to read the program in the memory 920 and perform the following processes:

when start_1=0, SIV1=0;

when start_1 ≥ 1, $$SIV1=\sum_{i=0}^{\text{start\_1}-1}(\frac{(W-\text{start\_0}+1-i)*(W-\text{start\_0}-i)}{2});$$

where start_1 is the fifth information; i=0, ..., start_1-1; and i is an integer; W is the parameter length; SIV1 is the fourth encoding value.

Optionally, the processor 910 is further used to read the program in the memory 920 and perform the following processes:
determining a fifth encoding value according to a difference between the fifth information and the fourth information, and a distance from the sixth information to the seventh information.

Optionally, the processor 910 is further used to read the program in the memory 920 and perform the following processes:

determining the fifth encoding value according to the formula: $SIV2 = \text{start} + \sum_{i=1}^{L-1}(N + 1 - i)$;
where start is the difference between the fifth information and the fourth information; SIV2 is the fifth encoding value; N is the difference between W and the fourth information; L is the distance from the sixth information and to the seventh information, L ≥ 1, and L is an integer; i=1, ..., L-1; and i is an integer.

In FIG. 9, a bus architecture may include any number of interconnected bus and bridge. Specifically, various circuits of one or more processors, which are represented by the processor 910, and one or more memories, which are represented by the memory 920, are linked together. The bus architecture may link various other circuits, such as a peripheral device, voltage regulator and a power management circuit together. These features are well known in this field; therefore, this disclosure does not make further description on these features. The bus interface provides an interface. The transceiver 900 may be multiple elements, including a transmitter and a receiver and provide units, which communicate with other devices on the transmission medium. The transmission medium includes radio channels, wired channels, optical cables, etc. The processor 910 is responsible for managing the bus architecture and the normal processing. The memory 920 may be used to store data used by the processor 910 for performing operations.

The processor 910 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

Referring to FIG. 10, one embodiment of the present disclosure provides a UE, including: a processor 1010, and a memory 1020 connected to the processor 1010 through a bus interface. The memory 1020 is used to store programs and data used by the processor 1010 when performing operations. The processor 1010 calls and executes the programs and data stored in the memory 1020.

A transceiver 1000 is connected to the bus interface and is used to receive and send data under the control of the processor 1010. The processor 1010 is used to read the program in the memory 1020 and perform the following processes:

receiving indication information sent by a network device;
determining a target encoding length according to a parameter length W and a number M of transmission information;

where an encoding length of the indication information is the target encoding length; a value or a value range of a corresponding index value s, of each transmission information in the M transmission information is: 0≤s≤W-1; a value of an n-th transmission information is less than or equal to a value of (n+1)-th transmission information, 1≤n≤M, n, M and W are positive integers;

decoding the indication information according to the target encoding length to obtain M pieces of transmission information.

Optionally, the M pieces of transmission information are used to indicate dividing points of M+1 segments of the parameter length W; or,

the M pieces of transmission information are used to indicate M pieces of modulation code scheme (MCS) index information.

Optionally, the processor 1010 is further used to read the program in the memory 1020 and perform the following processes:

determining a first parameter; where the first parameter is used to represent the number of combinations of values of the M pieces of transmission information in a range of 0 to W-1;

determining the target encoding length according to the first parameter.

Optionally, the processor 1010 is further used to read the program in the memory 1020 and perform the following processes:

determining the first parameter according to the parameter length W, the number M of transmission information, and a first algorithm.

Optionally, the first algorithm includes:

when M=3, the first $\text{the first parameter} = \frac{W*(W+1)*(2W+1)}{12} + \frac{W*(W+1)}{4}$ ; or,

when M=4, the first $\text{the first parameter} = \frac{W*(W+1)^2*(2W+1)}{12} - \frac{\left(W*(W+1)\right)^2}{8} +$ $\frac{W*(W+1)*(2W+1)}{24} + \frac{W*(W+1)}{8}$ .

Optionally, the processor 1010 is further used to read the program in the memory 1020 and perform the following processes:

determining the target encoding length according to the first parameter and a second algorithm.

Optionally, the second algorithm includes:

the target encoding $\text{the target encoding length} = \lceil \log_2(\text{first parameter}) \rceil$ .

Optionally, in a case where M=3, the M pieces of transmission information include: first information, second information and third information, and a value of the first information is less than or equal to a value of the second information, and the value of the second information is less than or equal to a value of the third information.

Optionally, the processor 1010 is further used to read the program in the memory 1020 and perform the following processes:

decoding to obtain the first information and a first encoding value corresponding to the first information according to the parameter length W and the target encoding length;

obtaining a second encoding value according to the first encoding value and the target encoding length;

determining the second information and the third information according to the parameter length W, the first information and the second encoding value.

Optionally, the processor 1010 is further used to read the program in the memory 1020 and perform the following processes:

within the value range, traversing possible values of the first information, and determining a value that meets a first condition as the first information; the first condition is: $\max\left(\sum_{i=0}^{\text{start}\_1-1}\left(\frac{(W+1-i)*(W-i)}{2}\right) \leq SIV\right)$ ; and,

determining the first encoding value according to the formula:

$$SIV1 = \sum_{i=0}^{start\_1-1} \left( \frac{(W+1-i)*(W-i)}{2} \right);$$

where start_1 is the first information; i=0, ..., start_1-1; and i is an integer; W is the parameter length; SIV1 is the first encoding value; when start_1=0, $\sum_{i=0}^{start\_1-1} \left( \frac{(W+1-i)*(W-i)}{2} \right) = 0$.

Optionally, the processor 1010 is further used to read the program in the memory 1020 and perform the following processes:

obtaining a difference between the second information and the first information and a distance from the second information to the third information according to the parameter length W, the first information and the second encoding value.

Optionally, the processor 1010 is further used to read the program in the memory 1020 and perform the following processes:

according to the formula: $SIV2 = start + \sum_{i=1}^{L-1}(N+1-i)$, determining the difference between the second information and the first information and the distance from the second information to the third information; where start is the difference between the second information and the first information; SIV2 is the second encoding value; N is the difference between W and the first information; L is the distance from the second information to the third information; i=1, ..., L-1; and i is an integer; W is the parameter length.

Optionally, the processor 1010 is further used to read the program in the memory 1020 and perform the following processes:

according to the formula: $SIV2 = L + \sum_{i=1}^{start}(N+1-start\ )$, determining the difference between the second information and the first information, and the distance from the second information to the third information; where when Start=0, the second encoding value is L; start is the difference between the second information and the first information; SIV2 is the second encoding value; N is the difference between W and the first information; L is the distance from the second information to the third information, L ≥ 1, and L is an integer; i=1, ..., L-1; and i is an integer; W is the parameter length.

In FIG. 10, a bus architecture may include any number of interconnected bus and bridge. Specifically, various circuits of one or more processors, which are represented by the processor 1010, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1000 may be multiple elements, including a transmitter and a receiver and provide units, which communicate with other devices on the transmission medium. The transmission medium includes radio channels, wired channels, optical cables, etc. For different UEs, a user interface 1030 may be an interface that can be connected to external or internal devices. The connected devices include but are not limited to a small keyboard, a display, a speaker, a microphone, a joystick, etc.

The processor 1010 may be a central processing unit (CPU), an application specific integrated circuit (ASIC), a field-programmable gate array (FPGA) or a complex programmable logic device (CPLD). The processor may also adopt multi-core architecture.

The present disclosure further provides a processor-readable storage medium that stores a computer program, and the computer program is used to cause the processor to execute the above method.

The processor-readable storage medium may be any available media or data storage device that the processor can access, including but not limited to magnetic storage (such as floppy disks, hard disks, magnetic tapes, magneto-optical disks (MO), etc.), optical storage (such as compact disk (CD), digital versatile disc (DVD), blu-ray disc (BD), high-definition versatile disc (HVD), etc.), and semiconductor memories (such as ROM, erasable programmable read-only memory (EPROM), electrically erasable programmable read-only memory (EEPROM), non-volatile memory (NAND FLASH), solid state drive (SSD)), etc.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

These processor-executable instructions may also be stored in a processor-readable storage that may guide the computer or the other programmable data process devices to function in a certain way, so that the instructions stored in the processor-readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

**Claims**

1. An information transmission method, applied to a network device, comprising:

    determining a target encoding length according to a parameter length W and a number M of pieces of transmission information; wherein a value or a value range of a corresponding index value s, of each transmission information in the M pieces of transmission information is: $0 \leq s \leq W-1$; a value of an n-th transmission information is less than or equal to a value of (n+1)-th transmission information, $1 \leq n \leq M$, n, M and W are positive integers;
    encoding the M pieces of transmission information to obtain indication information, wherein a length of the indication information is the target encoding length; and
    sending the indication information to a user equipment (UE).

2. The method according to claim 1, wherein the M pieces of transmission information are used to indicate dividing points of M+1 segments of the parameter length W; or,
    the M pieces of transmission information are used to indicate M pieces of modulation code scheme (MCS) index information.

3. The method according to claim 1, wherein the determining a target encoding length according to a parameter length W and a number M of pieces of transmission information, includes:

    determining a first parameter; wherein the first parameter is used to represent the number of combinations of values of the M pieces of transmission information in a range of 0 to W-1;
    determining the target encoding length according to the first parameter.

4. The method according to claim 3, wherein the determining a first parameter, includes:
    determining the first parameter according to the parameter length W, the number M of pieces of transmission information, and a first algorithm.

5. The method according to claim 4, wherein the first algorithm includes:

when M=3, the first $\text{the first parameter} = \frac{W*(W+1)*(2W+1)}{12} + \frac{W*(W+1)}{4}$ ; or,

when M=4, the first $\text{the first parameter} = \frac{W*(W+1)^2*(2W+1)}{12} - \frac{(W*(W+1))^2}{8} +$

$\frac{W*(W+1)*(2W+1)}{24} + \frac{W*(W+1)}{8}$ .

6. The method according to claim 3, wherein the determining the target encoding length according to the first parameter, includes:
   determining the target encoding length according to the first parameter and a second algorithm.

7. The method according to claim 6, wherein the second algorithm includes:
   the target encoding $\text{the target encoding length} = \lceil \log_2(\text{first parameter}) \rceil$ .

8. The method according to claim 1, wherein in a case where M=3, the M pieces of transmission information include: first information, second information and third information, and a value of the first information is less than or equal to a value of the second information, and the value of the second information is less than or equal to a value of the third information;
   the encoding the M pieces of transmission information to obtain indication information, includes:

   determining a first encoding value according to the first information and the parameter length W;
   determining a second encoding value according to the parameter length W, the first information, the second information and the third information;
   obtaining the indication information according to the first encoding value and the second encoding value.

9. The method according to claim 8, wherein the determining a first encoding value according to the first information and the parameter length W, includes:

   when start_1=0, SIV1=0; or,

   when $\text{start\_1} \geq 1,\ \text{SIV1} = \sum_{i=0}^{\text{start\_1}-1} \left( \frac{(W+1-i)*(W-i)}{2} \right)$ ;
   wherein start_1 is the first information; i=0, ..., start_1-1; and i is an integer; W is the parameter length; SIV1 is the first encoding value.

10. The method according to claim 8, wherein the determining a second encoding value according to the parameter length W, the first information, the second information, and the third information includes:
    determining the second encoding value according to the parameter length W, a difference between the second information and the first information, and a distance from the second information to the third information.

11. The method according to claim 10, wherein the determining the second encoding value according to a difference between the second information and the first information and a distance from the second information to the third information, includes:

    determining the second encoding value according to a formula: SIV2 = start + $\sum_{i=1}^{L-1}(N+1-i)$ ;
    wherein start is the difference between the second information and the first information; SIV2 is the second encoding value; N is a difference between the parameter length W and the first information; L is the distance from the second information to the third information; i=1, ..., L-1; and i is an integer; W is the parameter length.

12. The method according to claim 10, wherein the determining the second encoding value according to a difference between the second information and the first information and a distance from the second information to the third information, includes:

when Start=0, the second encoding value is L;
when start $\geq$ 1, determining the second encoding value according to a formula:

$$L + \sum_{i=1}^{\text{start}}(N + 1 - \text{start});$$

wherein start is the difference between the second information and the first information; SIV2 is the second encoding value; N is a difference between the parameter length W and the first information; L is the distance from the second information to the third information, L $\geq$ 1, and L is an integer; i=1, ..., L-1; and i is an integer; W is the parameter length.

13. The method according to claim 8, wherein the determining the second encoding value according to the parameter length W, the first information, the second information, and the third information, includes:

in a case where start_3 - start_2 $\leq$ |(W - start_1)/2|, determining the second encoding value according to a formula: SIV2 = *(W - start_1)* (start_3 - start_2) + start_2 - start_1;
in a case where start_3 - start_2 > |(W - start_1)/2|, determining the second encoding value according to a formula: SIV2 = *(W - start_1)* (W + start_2 - start_1 - start_3) + (W - 1 - *start_2*);
wherein 0 < start_3 - start_2+1$\leq$W - *start_2*; SIV2 is the second encoding value; start_1 is the first information; start_2 is the second information; start_3 is the third information; W is the parameter length.

14. The method according to claim 8, wherein the determining the second encoding value according to the parameter length W, the first information, the second information, and the third information, includes:

determining the second encoding value according to a formula: SIV2 =
$$start\_3 - \text{start\_2} + \sum_{i=1}^{\text{start\_2} - \text{start\_1}}(W + 1 - \text{start\_2})_;$$

wherein start_1 is the first information; start_2 is the second information; start_3 is the third information; W is the parameter length.

15. The method according to claim 1, wherein in a case where M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information; the encoding the M pieces of transmission information to obtain indication information, includes:

determining a third encoding value according to the fourth information and the parameter length W;
determining a fourth encoding value according to the fifth information and the parameter length W;
determining a fifth encoding value according to the fourth information, the fifth information and the sixth information;
obtaining the indication information according to the third encoding value, the fourth encoding value and the fifth encoding value.

16. The method according to claim 15, wherein the determining the third encoding value according to the fourth information and the parameter length W, includes:

when start_0=0, SIV0=0;

when start_0 $\geq$ 1, $$\text{SIV0} = \sum_{i=0}^{\text{start\_0}-1}(\frac{(W-i)\times(W+1-i)*(2\ (W-i)+1)}{12} + \frac{(W-i)*(W+1-i)}{4})_;$$
wherein start_0 is the fourth information; i=0, ..., start_0-1; and i is an integer; W is the parameter length; SIV0 is the third encoding value.

17. The method according to claim 15, wherein the determining a fourth encoding value according to the fifth information and the parameter length W, includes:

when start_1=0, SIV1=0;

when start_1≥1, $$SIV1=\sum_{i=0}^{start\_1-1}\left(\frac{(W-start\_0+1-i)*(W-start\_0-i)}{2}\right);$$
wherein start_1 is the fifth information; i=0, ..., start_1-1; and i is an integer; W is the parameter length; SIV1 is the fourth encoding value.

18. The method according to claim 15, wherein the determining a fifth encoding value according to the fourth information, the fifth information and the sixth information, includes:
determining the fifth encoding value according to a difference between the fifth information and the fourth information, and a distance from the sixth information to the seventh information.

19. The method according to claim 18, wherein the determining the fifth encoding value according to a difference between the fifth information and the fourth information, and a distance from the sixth information to the seventh information, includes:

determining the fifth encoding value according to a formula: SIV2 = start + $\sum_{i=1}^{L-1}(N+1-i)$;
wherein start is the difference between the fifth information and the fourth information; SIV2 is the fifth encoding value; N is a difference between the parameter length W and the fourth information; L is the distance from the sixth information and to the seventh information, L ≥ 1, and L is an integer; i=1, ..., L-1; and i is an integer.

20. An information transmission method, applied to a user equipment (UE), comprising:

receiving indication information sent by a network device;
determining a target encoding length according to a parameter length W and a number M of pieces of transmission information; wherein an encoding length of the indication information is the target encoding length; a value or a value range of a corresponding index value s, of each transmission information in the M transmission information is: 0≤s≤W-1; a value of an n-th transmission information is less than or equal to a value of (n+1)-th transmission information, 1 ≤n≤M, n, M and W are positive integers; and
decoding the indication information according to the target encoding length to obtain M pieces of transmission information.

21. The method according to claim 20, wherein the M pieces of transmission information are used to indicate dividing points of M+1 segments of the parameter length W; or,
the M pieces of transmission information are used to indicate M pieces of modulation code scheme (MCS) index information.

22. The method according to claim 20, wherein the determining a target encoding length according to a parameter length W and a number M of pieces pf transmission information, includes:

determining a first parameter; wherein the first parameter is used to represent the number of combinations of values of the M pieces of transmission information in a range of 0 to W-1;
determining the target encoding length according to the first parameter.

23. The method according to claim 22, wherein the determining the first parameter, includes:
determining the first parameter according to the parameter length W, the number M of transmission information, and a first algorithm.

24. The method according to claim 23, wherein the first algorithm includes:

when M=3, the first $$\text{the first parameter}=\frac{W*(W+1)*(2W+1)}{12}+\frac{W*(W+1)}{4}; \text{ or,}$$

when M=4, the first $$\text{the first parameter}=\frac{W*(W+1)^2*(2W+1)}{12}-\frac{(W*(W+1))^2}{8}+\frac{W*(W+1)*(2W+1)}{24}+\frac{W*(W+1)}{8}.$$

**25.** The method according to claim 22, wherein the determining the target encoding length according to the first parameter, includes:
determining the target encoding length according to the first parameter and a second algorithm.

**26.** The method according to claim 25, wherein the second algorithm includes:

$$\text{the target encoding length} = \lceil \log_2(\text{first parameter}) \rceil.$$

**27.** The method according to claim 20, wherein in a case where M=3, the M pieces of transmission information include: first information, second information and third information, and a value of the first information is less than or equal to a value of the second information, and the value of the second information is less than or equal to a value of the third information;
the decoding the indication information according to the target encoding length to obtain M pieces of transmission information, includes:

decoding to obtain the first information and a first encoding value corresponding to the first information according to the parameter length W and the target encoding length;
according to the first encoding value and the target encoding length, obtaining a second encoding value;
determining the second information and the third information according to the parameter length W, the first information and the second encoding value.

**28.** The method according to claim 27, wherein the decoding to obtain the first information and a first code value corresponding to the first information according to the parameter length W and the target encoding length includes:

within the value range, traversing possible values of the first information, and determining a value that meets a first condition as the first information; the first condition is:
$$\max \left( \sum_{i=0}^{\text{start\_1}-1} \left( \frac{(W+1-i)*(W-i)}{2} \right) \le SIV \right);$$
and,
determining the first encoding value according to a formula:

$$SIV1 = \sum_{i=0}^{\text{start\_1}-1} \left( \frac{(W+1-i)*(W-i)}{2} \right);$$

wherein start_1 is the first information; i=0, ..., start 1-1; and i is an integer; W is the parameter length; SIV1 is the first encoding value; when start_1=0, $\sum_{i=0}^{\text{start\_1}-1} \left( \frac{(W+1-i)*(W-i)}{2} \right) = 0$.

**29.** The method according to claim 27, wherein the determining the second information and the third information according to the parameter length W, the first information and the second encoding value, includes:
obtaining a difference between the second information and the first information and a distance from the second information to the third information according to the parameter length W, the first information and the second encoding value.

**30.** The method according to claim 29, wherein the obtaining a difference between the second information and the first information and a distance from the second information to the third information according to the parameter length W, the first information and the second encoding value, includes:

according to a formula: $SIV2 = \text{start} + \sum_{i=1}^{L-1}(N+1-i)$, determining the difference between the second information and the first information and the distance from the second information to the third information;
wherein start is the difference between the second information and the first information; SIV2 is the second encoding value; N is the difference between W and the first information; L is the distance from the second information to the third information; i=1, ..., L-1; and i is an integer; W is the parameter length.

**31.** The method according to claim 29, wherein the obtaining a difference between the second information and the first information and a distance from the second information to the third information according to the parameter length W, the first information and the second encoding value, includes:

according to a formula: $SIV2 = L + \sum_{i=1}^{start}(N + 1 - start)$, determining the difference between the second information and the first information, and the distance from the second information to the third information; wherein when Start=0, the second encoding value is L; start is the difference between the second information and the first information; SIV2 is the second encoding value; N is the difference between W and the first information; L is the distance from the second information to the third information, $L \geq 1$, and L is an integer; i=1, ..., L-1; and i is an integer; W is the parameter length.

32. A network device, comprising: a transceiver, a memory, a processor, and a computer program stored on the memory and executable on the processor; wherein the processor is used to read the program in the memory and perform the following process:

determining a target encoding length according to a parameter length W and a number M of transmission information; wherein a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers;
encoding the M pieces of transmission information to obtain indication information, wherein a length of the indication information is the target encoding length;
sending the indication information to a user equipment (UE).

33. The network device according to claim 32, wherein the M pieces of transmission information are used to indicate dividing points of M+1 segments of the parameter length W; or,
the M pieces of transmission information are used to indicate M pieces of modulation code scheme (MCS) index information.

34. The network device according to claim 33, wherein the processor is further used to read the program in the memory and perform the following process:

determining a first parameter; wherein the first parameter is used to represent the number of combinations of values of the M pieces of transmission information in a range of 0 to W-1;
determining the target encoding length according to the first parameter.

35. The network device according to claim 34, wherein the processor is further used to read the program in the memory and perform the following process:
determining the first parameter according to the parameter length W, the number M of transmission information, and a first algorithm.

36. The network device according to claim 36, wherein the first algorithm includes:

when M=3, the first $\text{the first parameter} = \frac{W*(W+1)*(2W+1)}{12} + \frac{W*(W+1)}{4}$; or,

when M=4, the first $\text{the first parameter} = \frac{W*(W+1)^2*(2W+1)}{12} - \frac{(W*(W+1))^2}{8} +$

$\frac{W*(W+1)*(2W+1)}{24} + \frac{W*(W+1)}{8}$.

37. The network device according to claim 34, wherein the processor is used to read the program in the memory and perform the following process:
determining the target encoding length according to the first parameter and a second algorithm.

38. The network device according to claim 37, wherein the second algorithm includes:

$$\text{the target encoding length} = \lceil \log_2(\text{first parameter}) \rceil.$$

**39.** The network device according to claim 32, wherein in a case where M=3, the M pieces of transmission information include: first information, second information and third information, and a value of the first information is less than or equal to a value of the second information, and the value of the second information is less than or equal to a value of the third information;

the processor is used to read the program in the memory and perform the following process:

determining a first encoding value according to the first information and the parameter length W;
determining a second encoding value according to the parameter length W, the first information, the second information and the third information;
obtaining the indication information according to the first encoding value and the second encoding value.

**40.** The network device according to claim 39, wherein the processor is used to read the program in the memory and perform the following process:

when start_1=0, SIV1=0; or,

when $start\_1 \geq 1, SIV1 = \sum_{i=0}^{start\_1-1}\left(\frac{(W+1-i)*(W-i)}{2}\right)$;

wherein start_1 is the first information; i=0, ..., start 1-1; and i is an integer; W is the parameter length; SIV1 is the first encoding value.

**41.** The network device according to claim 39, wherein the processor is used to read the program in the memory and perform the following process:
determining the second encoding value according to the parameter length W, a difference between the second information and the first information, and a distance from the second information to the third information.

**42.** The network device according to claim 41, wherein the processor is used to read the program in the memory and perform the following process:

determining the second encoding value according to a formula: $SIV2 = start + \sum_{i=1}^{L-1}(N+1-i)$;
wherein start is the difference between the second information and the first information; SIV2 is the second encoding value; N is the difference between W and the first information; L is the distance from the second information to the third information; i=1, ..., L-1; and i is an integer; W is the parameter length.

**43.** The network device according to claim 41, wherein the processor is used to read the program in the memory and perform the following process:

when Start=0, the second encoding value is L;
when start $\geq$ 1, determining the second encoding value according to a formula:

$$L + \sum_{i=1}^{start}(N+1-start);$$

wherein start is the difference between the second information and the first information; SIV2 is the second encoding value; N is the difference between W and the first information; L is the distance from the second information to the third information, L $\geq$ 1, and L is an integer; i=1, ..., L-1; and i is an integer; W is the parameter length.

**44.** The network device according to claim 39, wherein the processor is used to read the program in the memory and perform the following process:

in a case where start_3 - start_2 $\leq$ |(W - start_1)/2|, determining the second encoding value according to a formula: SIV2 = *(W - start_1)* (start_3 - start_2) + start_2 - start_1;
in a case where start_3 - start_2 > |(W - start_1)/2|, determining the second encoding value according to a formula: SIV2 = (*W* - start_1) (W + start_2 - start_1 - start_3) + (*W* - 1 - *start_2*);
wherein 0 < start_3 - start_2+1$\leq$W - *start_2;* SIV2 is the second encoding value; start_1 is the first information; start_2 is the second information; start_3 is the third information; W is the parameter length.

**45.** The network device according to claim 39, wherein the processor is used to read the program in the memory and perform the following process:

determining the second encoding value according to a formula: SIV2 =

$$start\_3- \text{start\_2} + \sum_{i=1}^{\text{start\_2} - \text{start\_1}}(W + 1 - \text{start\_2})$$ ;

wherein start_1 is the first information; start_2 is the second information; start_3 is the third information; W is the parameter length.

**46.** The network device according to claim 32, wherein in a case where M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information;

the processor is used to read the program in the memory and perform the following process:

determining a third encoding value according to the fourth information and the parameter length W;
determining a fourth encoding value according to the fifth information and the parameter length W;
determining a fifth encoding value according to the fourth information, the fifth information and the sixth information;
obtaining the indication information according to the third encoding value, the fourth encoding value and the fifth encoding value.

**47.** The network device according to claim 46, wherein the processor is used to read the program in the memory and perform the following process:

when start_0=0, SIV0=0;

$$\text{SIV0} = \sum_{i=0}^{\text{start\_0}-1}(\frac{(W-i)\times(W+1-i)*(2\ (W-i)+1)}{12} + \frac{(W-i)*(W+1-i)}{4})$$ ;

when start_0 ≥ 1,
wherein start_0 is the fourth information; i=0, ..., start_0-1; and i is an integer; W is the parameter length; SIV0 is the third encoding value.

**48.** The network device according to claim 46, wherein the processor is used to read the program in the memory and perform the following process:

when start_1=0, SIV1=0;

$$\text{SIV1}=\sum_{i=0}^{\text{start\_1}-1}(\frac{(W-start\_0+1-i)*(W-start\_0-i)}{2})$$ ;

when start_1≥1,
wherein start_1 is the fifth information; i=0, ..., start_1-1; and i is an integer; W is the parameter length; SIV1 is the fourth encoding value.

**49.** The network device according to claim 46, wherein the processor is used to read the program in the memory and perform the following process:
determining the fifth encoding value according to a difference between the fifth information and the fourth information, and a distance from the sixth information to the seventh information.

**50.** The network device according to claim 49, wherein the processor is used to read the program in the memory and perform the following process:

determining the fifth encoding value according to a formula: SIV2 = start + $\sum_{i=1}^{L-1}(N + 1 - i)$ ;
wherein start is the difference between the fifth information and the fourth information; SIV2 is the fifth encoding value; N is the difference between W and the fourth information; L is the distance from the sixth information and to the seventh information, L ≥ 1, and L is an integer; i=1, ..., L-1; and i is an integer.

**51.** A user equipment (UE), comprising: a transceiver, a memory, a processor, and a computer program stored on the memory and executable on the processor; wherein the processor is used to read the program in the memory and perform the following process:

receiving indication information sent by a network device;
determining a target encoding length according to a parameter length W and a number M of transmission information; wherein an encoding length of the indication information is the target encoding length; a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers;
decoding the indication information according to the target encoding length to obtain M pieces of transmission information.

52. The UE according to claim 51, wherein the M pieces of transmission information are used to indicate dividing points of M+1 segments of the parameter length W; or,
the M pieces of transmission information are used to indicate M pieces of modulation code scheme (MCS) index information.

53. The UE according to claim 51, wherein the processor is used to read the program in the memory and perform the following process:

determining a first parameter; wherein the first parameter is used to represent the number of combinations of values of the M pieces of transmission information in a range of 0 to W-1;
determining the target encoding length according to the first parameter.

54. The UE according to claim 53, wherein the processor is used to read the program in the memory and perform the following process:
determining the first parameter according to the parameter length W, the number M of transmission information, and a first algorithm.

55. The UE according to claim 54, wherein the first algorithm includes:

when M=3, the first $$\text{the first parameter} = \frac{W*(W+1)*(2W+1)}{12} + \frac{W*(W+1)}{4}$$ ; or,

when M=4, the first $$\text{the first parameter} = \frac{W*(W+1)^2*(2W+1)}{12} - \frac{(W*(W+1))^2}{8} + \frac{W*(W+1)*(2W+1)}{24} + \frac{W*(W+1)}{8}$$ .

56. The UE according to claim 53, wherein the processor is used to read the program in the memory and perform the following process:
determining the target encoding length according to the first parameter and a second algorithm.

57. The UE according to claim 56, wherein the second algorithm includes:
$$\text{the target encoding length} = \lceil \log_2 (\text{first parameter}) \rceil$$ .

58. The UE according to claim 51, wherein in a case where M=3, the M pieces of transmission information include: first information, second information and third information, and a value of the first information is less than or equal to a value of the second information, and the value of the second information is less than or equal to a value of the third information;
the processor is used to read the program in the memory and perform the following process:

decoding to obtain the first information and a first encoding value corresponding to the first information according to the parameter length W and the target encoding length;
according to the first encoding value and the target encoding length, obtaining a second encoding value;
determining the second information and the third information according to the parameter length W, the first information and the second encoding value.

59. The UE according to claim 58, wherein the processor is used to read the program in the memory and perform the following process:

within the value range, traversing possible values of the first information, and determining a value that meets a first condition as the first information; the first condition is: $\max\ \left(\sum_{i=0}^{\text{start\_1}-1}\left(\frac{(W+1-i)*(W-i)}{2}\right)\le SIV\right)$; and, determining the first encoding value according to a formula:

$$SIV1=\sum_{i=0}^{\text{start\_1}-1}\left(\frac{(W+1-i)*(W-i)}{2}\right);$$

wherein start_1 is the first information; i=0, ..., start_1-1; and i is an integer; W is the parameter length; SIV1 is the first encoding value; when start_1=0, $\sum_{i=0}^{\text{start\_1}-1}\left(\frac{(W+1-i)*(W-i)}{2}\right)=0$.

60. The UE according to claim 58, wherein the processor is used to read the program in the memory and perform the following process:
obtaining a difference between the second information and the first information and a distance from the second information to the third information according to the parameter length W, the first information and the second encoding value.

61. The UE according to claim 60, wherein the processor is used to read the program in the memory and perform the following process:

according to a formula: $SIV2 = \text{start} + \sum_{i=1}^{L-1}(N + 1 - i)$, determining the difference between the second information and the first information and the distance from the second information to the third information; wherein start is the difference between the second information and the first information; SIV2 is the second encoding value; N is the difference between W and the first information; L is the distance from the second information to the third information; i=1, ..., L-1; and i is an integer; W is the parameter length.

62. The UE according to claim 60, wherein the processor is used to read the program in the memory and perform the following process:

according to a formula: $SIV2 = L + \sum_{i=1}^{\text{start}}(N + 1 - \text{start})$, determining the difference between the second information and the first information, and the distance from the second information to the third information; wherein when Start=0, the second encoding value is L; start is the difference between the second information and the first information; SIV2 is the second encoding value; N is the difference between W and the first information; L is the distance from the second information to the third information, $L \ge 1$, and L is an integer; i=1, ..., L-1; and i is an integer; W is the parameter length.

63. An information transmission device, comprising:

a first determination module used to determine a target encoding length according to a parameter length W and a number M of transmission information; wherein a value or a value range of a corresponding index value s, of each transmission information in the M transmission information is: $0 \le s \le W-1$; a value of an n-th transmission information is less than or equal to a value of (n+1)-th transmission information, $1 \le n \le M$, n, M and W are positive integers;
an encoding module used to encode the M pieces of transmission information to obtain indication information, wherein a length of the indication information is the target encoding length;
a transmission module used to send the indication information to a user equipment (UE).

64. The device according to claim 63, wherein the M pieces of transmission information are used to indicate dividing points of M+1 segments of the parameter length W; or,

the M pieces of transmission information are used to indicate M pieces of modulation code scheme (MCS) index information.

65. The device according to claim 63, wherein the first determination module includes:

a first determination sub-module used to determine a first parameter; wherein the first parameter is used to represent the number of combinations of values of the M pieces of transmission information in a range of 0 to W-1;
a second determination sub-module used to determine the target encoding length according to the first parameter.

66. The device according to claim 65, wherein the first determination sub-module is specifically used to:
determine the first parameter according to the parameter length W, the number M of transmission information, and a first algorithm.

67. The device according to claim 66, wherein the first algorithm includes:

when M=3, the $$\text{the first parameter} = \frac{W*(W+1)*(2W+1)}{12} + \frac{W*(W+1)}{4}$$ ; or,

when M=4, the $$\text{the first parameter} = \frac{W*(W+1)^2*(2W+1)}{12} - \frac{(W*(W+1))^2}{8} + \frac{W*(W+1)*(2W+1)}{24} + \frac{W*(W+1)}{8}$$ .

68. The device according to claim 65, wherein the second determination sub-module is specifically used to:
determine the target encoding length according to the first parameter and a second algorithm.

69. The device according to claim 68, wherein the second algorithm includes:

$$\text{the target encoding length} = \lceil \log_2 (\text{first parameter}) \rceil.$$

70. The device according to claim 63, wherein in a case where M=3, the M pieces of transmission information include: first information, second information and third information, and a value of the first information is less than or equal to a value of the second information, and the value of the second information is less than or equal to a value of the third information;
the encoding module includes:

a first encoding submodule used to determine a first encoding value according to the first information and the parameter length W;
a second encoding submodule used to determine a second encoding value according to the parameter length W, the first information, the second information, and the third information;
a third encoding submodule used to obtain the indication information according to the first encoding value and the second encoding value.

71. The device according to claim 70, wherein the first encoding submodule is specifically used to determine:

when start_1=0, SIV1=0;

when start_1>=1, $$SIV1 = \sum_{i=0}^{start\_1-1} \left( \frac{(W+1-i) \times (W-i)}{2} \right)$$ ;
wherein start_1 is the first information; i=0, ..., start_1-1; and i is an integer; W is the parameter length; SIV1 is the first encoding value.

72. The device according to claim 70, wherein the first encoding submodule includes:
a first encoding unit used to determine the second encoding value according to the parameter length W, a difference between the second information and the first information, and a distance from the second information to the third information.

**73.** The device according to claim 72, wherein the first encoding unit is specifically used to:

determine the second encoding value according to a formula: SIV2 = start + $\sum_{i=1}^{L-1}(N + 1 - i)$ ;
wherein start is the difference between the second information and the first information; SIV2 is the second encoding value; N is the difference between W and the first information; L is the distance from the second information to the third information; i=1, ..., L-1; and i is an integer; W is the parameter length.

**74.** The device according to claim 72, wherein the first encoding unit is specifically used to:

when Start=0, determine the second encoding value as L;
when start≥1, determine the second encoding value according to a formula:

$$L + \sum_{i=1}^{\text{start}}(N + 1 - \text{start});$$

wherein start is the difference between the second information and the first information; SIV2 is the second encoding value; N is the difference between W and the first information; L is the distance from the second information to the third information, L≥1, and L is an integer; i=1, ..., L-1; and i is an integer; W is the parameter length.

**75.** The device according to claim 70, wherein the first encoding sub-module includes a second encoding unit used to:

in a case where start_3 - start_2 ≤ |(W - *start*_1)/2|, determine the second encoding value according to a formula: SIV2 = (W - *start*_1) (start_3 - start_2) + start_2 - start_1;
in a case where start_3 - start_2 > |(W - *start*_1)/2|, determine the second encoding value according to a formula: SIV2 = (W-*start*_1) (W + start_2 - start_1 - start_3) + (W - 1 - *start*_2);
wherein 0 < start_3 - start_2+1≤W - *start*_2; SIV2 is the second encoding value; start_1 is the first information; start_2 is the second information; start_3 is the third information; W is the parameter length.

**76.** The device according to claim 70, wherein the first encoding sub-module includes a third encoding unit used to:

determine the second encoding value according to a formula: SIV2 = $start\_3 - \text{start}\_2 + \sum_{i=1}^{\text{start}\_2 - \text{start}\_1}(W + 1 - \text{start}\_2)$ ;
wherein start_1 is the first information; start_2 is the second information; start_3 is the third information; W is the parameter length.

**77.** The device according to claim 63, wherein in the case of M=4, the M pieces of transmission information include: fourth information, fifth information, sixth information and seventh information, and a value of the fourth information is less than or equal to a value of the fifth information, the value of the fifth information is less than or equal to a value of the sixth information, and the value of the sixth information is less than or equal to a value of the seventh information; the encoding module includes:

a fourth encoding submodule used to determine a third encoding value according to the fourth information and the parameter length W;
a fifth encoding submodule used to determine a fourth encoding value according to the fifth information and the parameter length W;
a sixth encoding submodule used to determine a fifth encoding value according to the fourth information, the fifth information, and the sixth information;
a seventh encoding sub-module used to obtain the indication information according to the third encoding value, the fourth encoding value and the fifth encoding value.

**78.** The device according to claim 67, wherein the fourth encoding submodule is specifically used to determine:

when start_0=0, SIV0=0;
when start_0 ≥ 1, $\text{SIV0} = \sum_{i=0}^{\text{start}\_0-1}(\frac{(W-i) \times (W+1-i) * (2\ (W-i)+1)}{12} + \frac{(W-i) * (W+1-i)}{4})$ ;

wherein start_0 is the fourth information; i=0, ..., start_0-1; and i is an integer; W is the parameter length; SIV0 is the third encoding value.

79. The device according to claim 67, wherein the fifth encoding submodule is specifically used to determine:

when start_1=0, SIV1=0;

when start_1≥1, $SIV1 = \sum_{i=0}^{start\_1-1} \left( \frac{(W-start\_0+1-i)*(W-start\_0-i)}{2} \right)$ ;

wherein start_1 is the fifth information; i=0, ..., start_1-1; and i is an integer; W is the parameter length; SIV1 is the fourth encoding value.

80. The device according to claim 67, wherein the sixth coding submodule includes:
a fourth encoding unit used to determine a fifth encoding value according to a difference between the fifth information and the fourth information, and a distance from the sixth information to the seventh information.

81. The device according to claim 80, wherein the fourth encoding unit is specifically used to:

determine the fifth encoding value according to a formula: SIV2 = start + $\sum_{i=1}^{L-1}(N+1-i)$ ;
wherein start is the difference between the fifth information and the fourth information; SIV2 is the fifth encoding value; N is the difference between W and the fourth information; L is the distance from the sixth information and to the seventh information, L ≥ 1, and L is an integer; i=1, ..., L-1; and i is an integer.

82. An information transmission device, comprising:

a receiving module used to receive indication information sent by a network device;
a second determination module used to determine a target encoding length according to a parameter length W and a number M of transmission information; wherein an encoding length of the indication information is the target encoding length; a value or a value range of a corresponding index value s, of each transmission information in the M transmission information is: 0 ≤ s ≤ W-1; a value of an n-th transmission information is less than or equal to a value of (n+1)-th transmission information, 1 ≤n≤M, n, M and W are positive integers;
a decoding module used to decode the indication information according to the target encoding length to obtain M pieces of transmission information.

83. The device according to claim 82, wherein the M pieces of transmission information are used to indicate dividing points of M+1 segments of the parameter length W; or,
the M pieces of transmission information are used to indicate M pieces of modulation code scheme (MCS) index information.

84. The device according to claim 82, wherein the second determination module includes:

a third determination sub-module used to determine a first parameter, wherein the first parameter is used to represent the number of combinations of values of the M pieces of transmission information in a range of 0 to W-1;
a fourth determination sub-module used to determine the target encoding length according to the first parameter.

85. The device according to claim 84, wherein the third determination sub-module is specifically used to:
determine the first parameter according to the parameter length W, the number M of transmission information, and a first algorithm.

86. The device according to claim 85, wherein the first algorithm includes:

when M=3, the first parameter = $\frac{W*(W+1)*(2W+1)}{12} + \frac{W*(W+1)}{4}$ ; or,

when M=4, the first parameter = $\frac{W*(W+1)^2*(2W+1)}{12} - \frac{(W*(W+1))^2}{8} +$

$$\frac{W*(W+1)*(2W+1)}{24} + \frac{W*(W+1)}{8}.$$

**87.** The device according to claim 84, wherein the fourth determination sub-module is specifically used to: determine the target encoding length according to the first parameter and a second algorithm.

**88.** The device according to claim 87, wherein the second algorithm includes:

$$\text{the target encoding length} = \lceil \log_2(\text{first parameter}) \rceil.$$

**89.** The device according to claim 82, wherein in a case of M=3, the M pieces of transmission information include: first information, second information and third information, and a value of the first information is less than or equal to a value of the second information, and the value of the second information is less than or equal to a value of the third information;

the decoding module includes:

a first decoding submodule used to decode to obtain the first information and a first encoding value corresponding to the first information according to the parameter length W and the target encoding length;
a second decoding submodule used to obtain a second encoding value according to the first encoding value and the target encoding length;
a third decoding submodule used to determine the second information and the third information according to the parameter length W, the first information and the second encoding value.

**90.** The device according to claim 89, wherein the first decoding sub-module is specifically used to:

within the value range, traverse possible values of the first information, and determine a value that meets a first condition as the first information; the first condition is:

$$\max \ ( \sum_{i=0}^{\text{start}\_1 - 1} \left( \frac{(W+1-i)*(W-i)}{2} \right) \leq SIV) ;$$

and,

determine the first encoding value according to a formula:

$$SIV1 = \sum_{i=0}^{\text{start}\_1-1} \left( \frac{(W+1-i)*(W-i)}{2} \right) ;$$

wherein start_1 is the first information; i=0, ..., start_1-1; and i is an integer; W is the parameter length; SIV1 is the first encoding value; when start_1=0,

$$\sum_{i=0}^{\text{start}\_1 - 1} \left( \frac{(W+1-i)*(W-i)}{2} \right) = 0 .$$

**91.** The device according to claim 89, wherein the second decoding sub-module includes:
a first decoding unit used to obtain a difference between the second information and the first information and a distance from the second information to the third information according to the parameter length W, the first information and the second encoding value.

**92.** The device according to claim 91, wherein the first decoding unit is specifically used to:

according to a formula: $SIV2 = \text{start} + \sum_{i=1}^{L-1}(N+1-i)$, determine the difference between the second information and the first information and the distance from the second information to the third information; wherein start is the difference between the second information and the first information; SIV2 is the second encoding value; N is the difference between W and the first information; L is the distance from the second information to the third information; i=1, ..., L-1; and i is an integer; W is the parameter length.

**93.** The device according to claim 91, wherein the first decoding unit is specifically used to:

according to a formula: $SIV2 = L + \sum_{i=1}^{\text{start}}(N+1-\text{start})$, determine the difference between the second information and the first information, and the distance from the second information to the third information; wherein when Start=0, the second encoding value is L; start is the difference between the second information and the first information; SIV2 is the second encoding value; N is the difference between W and the first information; L is the distance from the second information to the third information, L ≥ 1, and L is an integer; i=1, ..., L-1; and i is an integer; W is the parameter length.

94. A processor-readable storage medium, comprising a computer program stored thereon; wherein the computer program is used to cause a processor to perform the information transmission method according to any one of claims 1 to 19, or perform the information transmission method according to any one of claims 20 to 31.

NCR network
controlled Repeater

Base
station

exchange control
signaling

NCR UE

location information

Backhaul Link

NCR forwarding

Access link

UE

FIG. 1

Base
station

L1 signaling

Backhaul beam

NCR

beam 3

beam 2

beam 1

beam 0

UE

FIG. 2

total length of W symbols

time segment 1    time segment 2    time segment 3    time segment 4    time segment 5

Beam ID=3        Beam ID=2        Beam ID=3        Beam ID=1        Beam ID=2

FIG. 3

determining a target encoding length according to a parameter length W and a number M of transmission information; where a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers

⌒101

↓

encoding the M pieces of transmission information to obtain indication information, where a length of the indication information is the target encoding length

⌒102

↓

sending the indication information to a user equipment

⌒103

FIG. 4

W=15 symbols

time segment 1   time segment 2   time segment 3   time segment 4

#0   #3   #6   #10   #14

transmission information 1
(Start_1)

transmission information 2
(Start_2)

transmission information 3
(Start_3)

FIG. 5

receiving indication information sent by a network device — 201

determining a target encoding length according to a parameter length W and a number M of transmission information; where an encoding length of the indication information is the target encoding length; a value or a value range of a corresponding index value s, of each transmission information in the M transmission information is: $0 \leq s \leq W-1$; a value of an n-th transmission information is less than or equal to a value of (n+1)-th transmission information, $1 \leq n \leq M$, n, M and W are positive integers — 202

decoding the indication information according to the target encoding length to obtain M pieces of transmission information — 203

FIG. 6

700

first determination module — 701

encoding module — 702

transmission module — 703

FIG. 7

800

801 receiving module

802 second determination module

803 decoding module

FIG. 8

910 processor

920 memory

bus interface

900 transceiver

FIG. 9

1010 processor

1020 memory

bus interface

1000 transceiver

1030 user interface

FIG. 10

## INTERNATIONAL SEARCH REPORT

| International application No. |
| --- |
| **PCT/CN2023/099900** |

| A. | CLASSIFICATION OF SUBJECT MATTER |
| --- | --- |

H04L1/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 智能中继器, 波束, 多信息, 编码, 参数, 数量, 目标编码长度, NCR, beam, multiple, information, code, parameter, number, length

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 101902313 A (ZTE CORP.) 01 December 2010 (2010-12-01) description, paragraphs [0024]-[0045] | 1-94 |
| A | CN 102231659 A (ZTE CORP.) 02 November 2011 (2011-11-02) entire document | 1-94 |
| A | CN 111181707 A (HUAWEI TECHNOLOGIES CO., LTD.) 19 May 2020 (2020-05-19) entire document | 1-94 |
| A | WO 2018044849 A1 (IDAC HOLDINGS, INC.) 08 March 2018 (2018-03-08) entire document | 1-94 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 August 2023** | **05 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099900**

| Patent document cited in search report | | | Publication date (day/month/year) | Patent family member(s) | | | Publication date (day/month/year) |
|---|---|---|---|---|---|---|---|
| CN | 101902313 | A | 01 December 2010 | WO | 2011160449 | A1 | 29 December 2011 |
| CN | 102231659 | A | 02 November 2011 | None | | | |
| CN | 111181707 | A | 19 May 2020 | JP | 2022506735 | A | 17 January 2022 |
| | | | | US | 2021266912 | A1 | 26 August 2021 |
| | | | | CA | 3118605 | A1 | 14 May 2020 |
| | | | | EP | 3869886 | A1 | 25 August 2021 |
| | | | | WO | 2020094133 | A1 | 14 May 2020 |
| | | | | VN | 79685 | A | 26 July 2021 |
| | | | | IN | 202117022402 | A | 01 October 2021 |
| | | | | BR | 112021008666 | A2 | 16 November 2021 |
| WO | 2018044849 | A1 | 08 March 2018 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210864235X